(19) Europäisches Patentamt
European Patent Office
Office européen des brevets

(11) EP 3 720 673 B1

# (12) EUROPÄISCHE PATENTSCHRIFT

(45) Veröffentlichungstag und Bekanntmachung des Hinweises auf die Patenterteilung:
**17.02.2021 Patentblatt 2021/07**

(21) Anmeldenummer: **19712616.2**

(22) Anmeldetag: **28.03.2019**

(51) Int Cl.:
***B29C 43/22*** $^{(2006.01)}$ ***B29C 43/34*** $^{(2006.01)}$
***C09D 133/12*** $^{(2006.01)}$ ***B29C 59/04*** $^{(2006.01)}$
***B29C 43/46*** $^{(2006.01)}$ ***B44B 5/02*** $^{(2006.01)}$
***B44C 1/24*** $^{(2006.01)}$ ***B29C 43/00*** $^{(2006.01)}$
***B29C 35/10*** $^{(2006.01)}$ ***B29C 35/08*** $^{(2006.01)}$
***B29K 667/00*** $^{(2006.01)}$ ***B29L 7/00*** $^{(2006.01)}$
***B29L 31/00*** $^{(2006.01)}$

(86) Internationale Anmeldenummer:
**PCT/EP2019/057922**

(87) Internationale Veröffentlichungsnummer:
**WO 2019/185832 (03.10.2019 Gazette 2019/40)**

## (54) VERFAHREN ZUR ÜBERTRAGUNG EINER PRÄGESTRUKTUR AUF DIE OBERFLÄCHE EINES BESCHICHTUNGSMITTELS UND ALS PRÄGEMATRIZE EINSETZBARER VERBUND

METHOD FOR TRANSFERRING AN EMBOSSING STRUCTURE TO THE SURFACE OF A COATING AGENT AND COMBINATION WHICH CAN BE USED AS AN EMBOSSING DIE

PROCÉDÉ DE TRANSFERT D'UNE STRUCTURE GAUFRÉE VERS LA SURFACE D'UN AGENT DE REVÊTEMENT ET COMPOSITE POUVANT ÊTRE INSÉRÉ EN TANT QUE MATRICE DE GAUFRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2018 EP 18164692**

(43) Veröffentlichungstag der Anmeldung:
**14.10.2020 Patentblatt 2020/42**

(73) Patentinhaber: **BASF Coatings GmbH**
**48165 Münster (DE)**

(72) Erfinder:
- **KUES, Jan-Bernd**
  **48165 Münster (DE)**
- **PIONTEK, Susanne**
  **48165 Münster (DE)**
- **EXNER, Joerg**
  **48165 Münster (DE)**
- **KLEINE-BLEY, Birgit**
  **48165 Münster (DE)**
- **VON DER AA, Robert**
  **04451 Borsdorf/OT Panitzsch (DE)**
- **LORENZ, Michael**
  **04155 Leipzig (DE)**
- **BERGMANN, Frank**
  **06114 Halle (DE)**
- **SCHIPPER, Wilfried**
  **44263 Dortmund (DE)**
- **KRABBENBORG, Sven, Olle**
  **48165 Münster (DE)**
- **DUENNEWALD, Joerg**
  **48165 Münster (DE)**

(74) Vertreter: **BASF IP Association**
**BASF SE**
**GBI-C006**
**67056 Ludwigshafen (DE)**

(56) Entgegenhaltungen:
**EP-B1- 2 146 805** **US-A1- 2007 204 953**
**US-A1- 2015 166 704**

- **MARKUS LEITGEB ET AL: "Multilength Scale Patterning of Functional Layers by Roll-to-Roll Ultraviolet-Light-Assisted Nanoimprint Lithography", ACS NANO, Bd. 10, Nr. 5, 5. April 2016 (2016-04-05), Seiten 4926-4941, XP055477172, US ISSN: 1936-0851, DOI: 10.1021/acsnano.5b07411 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Übertragung einer Prägestruktur auf eine Oberfläche eines Beschichtungsmittels (B2a), welches die Schritte (1-i) und (2-i) oder (1-ii) und (2-ii) sowie die Schritte (3) und optional (4) umfasst, wobei die Schritte (1-i) und (2-i) oder (1-ii) und (2-ii) unter Verwendung eines als Prägematrize (p2) eines Prägewerkzeugs (P2) eingesetzten Verbunds (F1B1) aus einem Substrat (F1) und einer zumindest teilweise geprägten und zumindest teilweise ausgehärteten Beschichtung (B1) durchgeführt werden und das zur Herstellung von (B1) des Verbunds (F1B1) eingesetzte Beschichtungsmittel (B1a) ein strahlenhärtbares Beschichtungsmittel definierter Zusammensetzung ist, einen Verbund (F1B1) sowie eine Verwendung des Verbunds (F1B1) als Prägematrize (p2) eines Prägewerkzeugs (P2) zur Übertragung einer Prägestruktur auf wenigstens einen Teil einer Oberfläche eines Beschichtungsmittels (B2a).

## Stand der Technik

Es ist in der Technik heute in vielen Anwendungen üblich, Werkstücke auf ihrer Oberfläche mit Strukturen zu versehen, deren strukturelle Ausprägungen sich im Mikrometer- oder sogar im Nanometer-Bereich bewegen. Derartige Strukturen werden auch als Mikrostrukturen (Strukturen mit Ausprägungen im Mikrometerbereich) oder Nanostrukturen (Strukturen mit Ausprägungen im Nanometerbereich) bezeichnet. Derartige Strukturen werden z.B. eingesetzt, um Werkstoffoberflächen hinsichtlich optischer, bionischer und/oder haptischer Eigenschaften zu beeinflussen. Solche Strukturen werden auch als Prägungen oder Prägestrukturen bezeichnet.

Eine gängige Methode ist es dabei, diese Strukturen in einen Lack zu übertragen. Die Übertragung der Strukturen in den Lack wird hierbei häufig mit einem Prägevorgang erreicht, bei dem eine Matrize, die auf einer Prägeoberfläche bzw. Übertragungsoberfläche die auszubildenden Mikro- und/oder Nanostrukturen in einer Negativform enthält, mit dem Lack in Kontakt gebracht und in diesen eingedrückt wird. Um die Strukturen dann auf der Oberfläche des Werkstückes dauerhaft auszubilden und zu erhalten, wird der Lack typischerweise *in situ* gehärtet.

WO 90/15673 A1 beschreibt ein Verfahren, bei dem ein strahlenhärtbarer Lack auf eine Folie oder auf ein Prägewerkzeug mit der negativen gewünschten Prägestruktur aufgebracht wird und das Prägewerkzeug dann auf die mit dem Lack versehene Folie bzw. das mit dem Lack versehende Prägewerkzeug dann auf die Folie gedrückt wird. Noch während der strahlenhärtbare Lack sich zwischen Folie und Prägewerkzeug befindet wird ausgehärtet und nach Entfernen des Werkzeuges dann eine Folie erhalten, die mit einem strahlengehärteten Lack versehen ist, der die gewünschte positive Prägestruktur enthält. Auch im europäischen Patent EP 1 135 267 B1 ist ein solches Verfahren beschrieben, bei dem ein aushärtbares Überzugsmittel auf die zu dekorierende Substratoberfläche aufgebracht und eine entsprechende Prägematrize mit Negativ-Muster in die nicht ausgehärtete Überzugsschicht gedrückt wird. Im Anschluss wird die Überzugsschicht ausgehärtet und die Prägematrize anschließend entfernt. EP 3 178 653 A1 offenbart einen Artikel umfassend ein flexibles Gewebe mit einer texturierten Oberfläche zum Einsatz beim replikativen Casting von härtbaren Systemen. Das Gewebe kann Polymerschichten aufweisen, die durch Einsatz mono- und multifunktioneller Acrylate hergestellt werden können.

Aus dem US Patent Nr. 9,778,564 B2 ist ein Aufdruckmaterial bekannt, welches unter anderem eine Komponente enthält, die zwingend eine (Meth)acrylamidstruktureinheit aufweist, sowie eine weitere Komponente mit 2 bis 6 polymerisierbaren Gruppen, die zudem Alkylenoxideinheiten aufweist. Nach Aufbringen dieses Materials auf ein Substrat kann der daraus erhaltene Film während seiner Härtung mittels UV-Strahlung unter Einsatz eines Nickel-Prägewerkzeugs mit einem Muster versehen werden.

US 2007/0204953 A1 offenbart ein Verfahren zum Strukturieren von Klebeharzen, welches nacheinander das Aufbringen einer härtbaren Klebeharzschicht auf ein Substrat, ein Aufbringen eines strukturierten Musters auf diese Schicht und anschließend ein Härten der Schicht vorsieht, um so ein Substrat zu erhalten, das mit einem gehärteten Klebeharz versehen ist, das die gewünschte Strukturierung enthält.

WO 2015/154866 A1 betrifft ein Verfahren zum Herstellung eines Substrats mit strukturierter Oberfläche. Dabei wird zunächst eine erste UV-härtende Beschichtung auf das Substrat aufgebracht und diese gehärtet. Auf diese ausgehärtete Beschichtung wird dann als Prägelack eine zweite UV-härtende Beschichtung aufgebracht, diese zwecks Generierung einer Mikrostruktur geprägt und im Anschluss ausgehärtet.

Aus US 2015/166704 A1 ist eine Mikrostrukturen aufweisende ausgehärtete Beschichtung auf einem Substrat bekannt, die kratzbeständig ist.

DE 10 2007 062 123 A1 beschreibt ein Verfahren zum Aufbringen eines Prägelacks wie beispielswiese eines durch UV-Strahlung vernetzbaren Prägelacks auf eine Trägerfolie, Strukturierung des Prägelacks im Mikrometerbereich sowie Härten des auf der Folie aufgebrachten Prägelack unter Erhalt einer geprägten Folie, deren Mikrostruktur im Anschluss durch Abscheiden eines Metall auf der geprägten Oberfläche, d.h. durch Metallisierung der Folie, abgeformt wird. Nachteilig an solchen Abformungen durch eine anschließende Metallisierung ist jedoch eine dadurch bedingte unerwünschte Herabsetzung der Abformqualität.

Schließlich wird in EP 2 146 805 B1 ein Verfahren zur Herstellung eines Materials mit einer texturierten Oberfläche beschrieben. Das Verfahren sieht dabei vor, ein Substrat mit einer aushärtbaren Beschichtung zu versehen, diese zwecks Prägung mit einem Texturiermedium in Kontakt zu bringen, und die dann auf diese Weise geprägte Beschichtung auszuhärten und von dem Texturiermedium zu entfernen. Das Texturiermedium weist eine Oberflächenschicht auf, die 20 bis 50% eines Acryl-Oligomeren, 15 bis 35% eines monofunktionalen Monomers und 20 bis 50% eines multifunktionalen Monomers umfasst. In der WO 2016/090395 A1 und im ACS Nano Journal, 2016, 10, Seiten 4926 bis 4941 werden ähnliche Verfahren beschrieben, wobei jeweils explizit gelehrt wird, dass zur Herstellung der Oberflächenschicht des Texturiermediums jeweils große Teile 3-fach ethoxyliertes Trimethylolpropantriacrylat ($TMP(EO)_3TA$) eingesetzt werden sollten, um eine vergleichsweise harte Matrize des Texturiermediums erzeugen zu können. Das zur Herstellung der Oberflächenschicht eingesetzte Beschichtungsmittel muss gemäß der WO 2016/090395 A1 zudem zwingend einen Baustein enthalten, der wenigstens zwei Thiol-Gruppen aufweist wie zum Beispiel Trimethylolpropantris(3-mercaptopropionat). Der Einsatz solcher Thiole in entsprechenden Beschichtungsmittelzusammensetzungen ist jedoch oftmals nachteilig, da solche Zusammensetzungen nicht immer eine ausreichende Lagerstabilität aufweisen und daraus hergestellte Beschichtungen nicht in ausreichendem Maße bewitterungsstabil sind. Dazu kommt noch eine durch den Einsatz der Thiole hervorgerufene Geruchsbelästigung, die natürlich ebenfalls nicht wünschenswert ist.

Die aus dem Stand der Technik bekannten Prägeverfahren wie insbesondere die in EP 2 146 805 B1, WO 2016/090395 A1 und ACS Nano Journal, 2016, 10, Seiten 4926 bis 4941 beschriebenen Verfahren sind jedoch nicht immer in ausreichendem Maße dazu geeignet, Prägungen insbesondere im Mikrometerbereich und/oder im Nanometerbereich, d.h. Mikro- und/oder Nanostrukturen, zu übertragen, insbesondere nicht, ohne bei einer solchen Übertragung die Abformgenauigkeit in einem inakzeptablen Maß herabzusetzen. Gleichzeitig werden die Prägungen nicht immer in ausreichendem Maße repliziert.

Es besteht daher ein Bedarf an einem Prägeverfahren, das die vorgenannten Nachteile nicht aufweist.

## Aufgabe

Eine Aufgabe der vorliegenden Erfindung ist es daher, ein Verfahren zur Übertragung von Prägestrukturen auf Beschichtungsmittel und auf solche Beschichtungsmittel aufweisende Substrate zur Verfügung zu stellen, - insbesondere ein solches, mit dem entsprechende Mikro- und/oder Nanostrukturen übertragen werden können, - welches eine ausreichende Abformgenauigkeit bei der Übertragung der Prägestrukturen ermöglicht, so dass bei der Prägung keine Modulationstiefe verloren geht, und welches insbesondere die Erzeugung einer möglichst wiederverwertbaren Prägematrize zur Übertragung der Prägestrukturen ermöglicht bzw. unter Einsatz einer solchen Prägematrize durchgeführt werden kann. Gleichzeitig sollen die zu übertragenden Prägestrukturen in möglichst hohem Maße repliziert werden können und das Verfahren insbesondere keine durch unerwünschte oder nicht ausreichende Eigenschaften der eingesetzten Beschichtungsmittel und Beschichtungen wie beispielsweise einer nicht ausreichenden Haftung hervorgerufenen Nachteile aufweisen.

## Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist daher ein Verfahren zur Übertragung einer Prägestruktur gemäß Anspruch 1.

Vorzugsweise beträgt der Parameter m in den wenigstens drei jeweils voneinander verschiedenen oder zumindest teilweise identischen Struktureinheiten der Formel (I) der Komponente (a) des Beschichtungsmittels (B1a) jeweils mindestens 2.

Es wurde überraschend gefunden, dass es das erfindungsgemäße Verfahren ermöglicht, Prägestrukturen, insbesondere Mikro- und/oder Nanostrukturen, in einer sehr hohen Abformgenauigkeit auf das zu prägende Beschichtungsmittel (B2a) zu übertragen, so dass bei der Prägung keine Modulationstiefe verloren geht, insbesondere in einer hohen Abformgenauigkeit in einem Bereich von 10 nm bis 1000 $\mu$m Strukturbreite und in einem Bereich von 0,1 nm bis 1000 $\mu$m Strukturtiefe. Es wurde in diesem Zusammenhang insbesondere überraschend gefunden, dass es das erfindungsgemäße Verfahren ermöglicht, mit einem Verbund (F1B1), der durch Beschichten eines strahlenhärtbaren Beschichtungsmittels (B1a) auf ein vorzugsweise bewegtes Substrat (F1) erhältlich ist und der als Prägematrize (p2) des Prägewerkzeugs (P2) eingesetzt wird, Prägestrukturen mit einer sehr hohen Abformgenauigkeit und einem hohem Erfolg der Replikation zu übertragen.

Ferner wurde überraschend gefunden, dass das erfindungsgemäße Verfahren deswegen so vorteilhaft angewendet werden kann, da die Beschichtung (B1) des eingesetzten Verbunds (F1B1), der durch Beschichten eines strahlenhärtbaren Beschichtungsmittels (B1a) auf ein vorzugsweise bewegtes Substrat (F1) erhältlich ist, sich durch einen hohen Doppelbindungsumsatz auszeichnet. Dadurch wird insbesondere eine gute Trennung des Verbunds (F2B2) vom

Prägewerkzeug (P2) innerhalb des optionalen Schritts (4) des erfindungsgemäßen Verfahrens ermöglicht. Zudem wurde überraschend gefunden, dass das erfindungsgemäße Verfahren deswegen so vorteilhaft angewendet werden kann, da die Beschichtung (B1) auf dem Substrat (F1) sich durch eine sehr gute Haftung auszeichnet und ein entsprechender Verbund (F1B1) auch daher sehr gut als Prägematrize (p2) eingesetzt werden kann.

Ferner wurde überraschend gefunden, dass der innerhalb des erfindungsgemäßen Verfahrens als Prägematrize (p2) des Prägewerkzeugs (P2) einsetzbare Verbund (F1B1) zur Übertragung der Prägestrukturen wie Mikro- und/oder Nanostrukturen insbesondere in Form einer Endlos-Prägematrize wiederverwertbar ist, was aus ökonomischen Gründen vorteilhaft ist. Außerdem ist dieser vorzugsweise in Form einer Endlos-Prägematrize (p2) vorliegende Verbund (F1B1) überraschenderweise nicht nur wiederverwertbar und damit mehrfach nutzbar, sondern lässt sich zudem kostengünstig und schnell im großindustriellen Maßstab produzieren.

Ein weiterer Gegenstand der vorliegenden Erfindung ist daher auch ein Verbund (F1B1) gemäß Anspruch 12.

Vorzugsweise ist der Verbund (F1B1) dabei mittels Durchführung der nachstehend näher beschriebenen Verfahrensschritte (5) bis (8) erhältlich.

Es wurde überraschenderweise gefunden, dass der erfindungsgemäße zumindest teilweise geprägte Verbund (F1B1) nicht nur als eine wiederverwertbare Prägematrize (p2), vorzugsweise als eine wiederverwertbare Endlos-Prägematrize (p2), in einem Prägeverfahren wie dem erfindungsgemäßen Verfahren eingesetzt werden kann, sondern auch, dass durch die in dem zur Herstellung dieses Verbunds eingesetzten strahlenhärtbaren Beschichtungsmittel (B1a) enthaltenen Komponenten eine sehr gute Trennung des als Prägematrize (p2) innerhalb des Prägewerkzeugs (P2) eingesetzten Verbunds (F1B1) von der geprägten Beschichtung (B2) bzw. von einem entsprechenden Verbund wie dem Verbund (F2B2) umfassend eine solche geprägte Beschichtung wie die Beschichtung (B2) erzielt werden kann, insbesondere bei Durchführung des erfindungsgemäßen Verfahrens und darin innerhalb des optionalen Schritts (4). Zudem wurde überraschend gefunden, dass sich die Beschichtung (B1) des eingesetzten Verbunds (F1B1), der durch Beschichten eines strahlenhärtbaren Beschichtungsmittels (B1a) auf ein Substrat (F1) erhältlich ist, vorteilhafterweise durch einen hohen Doppelbindungsumsatz wie einem Doppelbindungsumsatz von $\geq$90% auszeichnet. Ferner wurde insbesondere gefunden, dass insbesondere bei Durchlaufen der Verfahrensschritte (5) bis (8) zur Herstellung des Verbunds (F1B1) die Prägestruktur der Beschichtung (B1) mit hoher Abformgenauigkeit und hohem Erfolg der Replikation erhalten werden kann.

Ein weiterer Gegenstand der vorliegenden Erfindung ist zudem eine Verwendung des erfindungsgemäßen Verbunds (F1B1) gemäß Anspruch 15.

## Ausführliche Beschreibung

Der Begriff "umfassend" im Sinne der vorliegenden Erfindung im Zusammenhang mit den erfindungsgemäß eingesetzten Beschichtungsmitteln wie beispielsweise dem Beschichtungsmittel (B1a) und dem erfindungsgemäßen Verfahren und dessen Verfahrensschritten hat vorzugsweise die Bedeutung "bestehend aus". Dabei können beispielsweise hinsichtlich des erfindungsgemäß eingesetzten Beschichtungsmittels (B1a) - neben den Komponenten (a) und (b) sowie (c) gegebenenfalls (d) - zudem eine oder mehrere der weiteren nachstehend genannten optional in dem erfindungsgemäß eingesetzten Beschichtungsmittel (B1a) enthaltenen Komponenten in diesem enthalten sein. Alle Komponenten können dabei jeweils in ihren nachstehend genannten bevorzugten Ausführungsformen vorliegen. Hinsichtlich des erfindungsgemäßen Verfahrens kann dieses dabei neben den Schritten (1-i) und (2-i) oder (1-ii) und (2-ii) sowie (3) und optional (4) weitere optionale Verfahrensschritte aufweisen wie zum Beispiel die Schritte (5) bis (8).

Nachstehend und vorstehend werden die erste Beschichtung B1 auch als Beschichtung (B1), die zweite Beschichtung B2 auch als Beschichtung (B2), das erste Beschichtungsmittel B1a auch als Beschichtungsmittel (B1a), das zweite Beschichtungsmittel B2a auch als Beschichtungsmittel (B2a), das erste Substrat F1 auch als Substrat (F1), das zweite Substrat F2 auch als Substrat (F2), der erste Verbund F1B1 auch als Verbund (F1B1), der zweite Verbund F2B2aB1 F1 auch als Verbund (F2B2aB1F1), der dritte Verbund B2aB1F1 auch als Verbund (B2aB1F1), der vierte Verbund F2B2B1F1 auch als Verbund (F2B2B1 F1), der fünfte Verbund F2B2 auch als Verbund (F2B2) und der sechste Verbund F2B2a auch als Verbund (F2B2a) bezeichnet. Gleichermaßen werden nachstehend und vorstehend die erste Komponente a) auch als Komponente (a), die zweite Komponente b) auch als Komponente (b), die dritte Komponente c) auch als Komponente (c) und die vierte Komponente d) auch als Komponente (d) bezeichnet. Gleichermaßen werden nachstehend und vorstehend Schritt 1-i) auch als Schritt (1-i), Schritt 1-ii) auch als Schritt (1-ii), Schritt 2-i) auch als Schritt (2-i), Schritt 2-ii) auch als Schritt (2-ii), Schritt 3) auch als Schritt (3), Schritt 4) auch als Schritt (4), Schritt 5) auch als Schritt (5), Schritt 6) auch als Schritt (6), Schritt 7) auch als Schritt (7) und Schritt 8) auch als Schritt (8) bezeichnet.

*Erfindungsgemäßes Verfahren zur Übertragung einer Prägestruktur umfassend wenigstens die Schritte (1-i) und (2-i) oder (1-ii) und (2-ii) sowie (3) und optional (4)*

Ein erster Gegenstand der vorliegenden Erfindung ist wie vorstehend ausgeführt das erfindungsgemäße Verfahren zur Übertragung einer Prägestruktur auf wenigstens einen Teil einer Oberfläche eines Beschichtungsmittels (B2a). In Fig. 1 sind die Schritte (1-i) und (2-i) sowie (3) und optional (4) des erfindungsgemäßen Verfahrens beispielhaft illustriert, wie auch der nachstehenden Beschreibung dieser Figur zu entnehmen ist.

Vorzugsweise ist das erfindungsgemäße Verfahren ein kontinuierliches Verfahren.

Die Prägestruktur wird durch das zumindest teilweise Prägen des zumindest teilweise auf die Oberfläche des Substrats (F2) applizierten Beschichtungsmittels (B2a) gemäß Verfahrensschritt (2-i) übertragen bzw. erhalten. Alternativ ist eine Übertragung mittels der Verfahrensschritte (1-ii) und (2-ii) möglich. Unter dem Begriff "Prägung" bzw. unter dem Begriff "Prägen" wird dabei die zumindest teilweise Ausrüstung des Beschichtungsmittels (B2a), optional als Teil eines Verbunds (F2B2a), an zumindest einem Teil seiner Oberfläche mit einer Prägestruktur bezeichnet. Dabei wird wenigstens ein bestimmtes Areal des Beschichtungsmittels (B2a) mit einer Prägestruktur ausgerüstet. Vorzugsweise wird die gesamte Oberfläche des Beschichtungsmittels (B2a), optional als Teil des Verbunds (F2B2a), mit einer Prägestruktur ausgerüstet. Analoges gilt im Zusammenhang mit den Begriffen "Prägung" bzw. "Prägen" hinsichtlich des als Prägematrize (p2) eingesetzten und zumindest teilweise geprägten Verbunds (F1B1) aus einem Substrat (F1) und einer zumindest teilweise geprägten und zumindest teilweise ausgehärteten Beschichtung (B1), der gemäß den nachfolgend beschriebenen Schritten (5) bis (8) hergestellt werden kann.

Die Prägestrukturen der Verbünde (F1B1), (F2B2a) und (F2B2) beruhen vorzugsweise jeweils unabhängig voneinander auf einem wiederkehrenden und/oder regelmäßig angeordneten Muster. Es kann sich dabei jeweils um eine durchgehende Prägestruktur wie eine durchgehende Rillenstruktur oder um mehrere vorzugsweise wiederkehrende Einzelprägestrukturen handeln. Die jeweiligen Einzelprägestrukturen können dabei vorzugsweise wiederum auf einer Rillenstruktur basieren, welche mehr oder weniger stark ausgeprägte Stege (Prägeerhebungen) aufweist, durch welche die Prägehöhe der Prägestruktur definiert wird. Entsprechend der jeweiligen Geometrie der Stege einer vorzugsweise wiederkehrenden Einzelprägestruktur können sich in der Aufsicht eine Vielzahl jeweils unterschiedlicher, vorzugsweise wiederkehrender Einzelprägestrukturen ergeben, wie z.B. vorzugsweise schlangenlinienförmige, zackenförmige, hexagonale, diamantenförmige, rautenförmige, parallelogrammförmige, wabenförmige, kreisförmige, punktförmige, sternförmige, leinenförmige, netzförmige, mehreckige, vorzugsweise dreieckige, viereckige, besonders bevorzugt rechteckige und quadratische, fünfeckige, sechseckige, siebeneckige und achteckige, drahtförmige, ellipsenförmige, ovale und gitterförmig gestaltete Muster, wobei sich auch wenigstens zwei Muster überlagern können. Die Stege der Einzelprägestrukturen können auch eine Krümmung, d.h. eine konvexe und/oder oder konkave Struktur aufweisen.

Die jeweilige Prägestruktur kann dabei durch ihre Breite wie die Breite der Stege, also durch ihre Strukturbreite, und durch die Höhe der Prägungen, also durch ihre Strukturhöhe (bzw. Strukturtiefe), beschrieben werden. Die Strukturbreite wie die Breite der Stege kann dabei eine Länge von bis zu einem Zentimeter aufweisen, liegt aber vorzugsweise in einem Bereich von 10 nm bis 1 mm. Die Strukturhöhe liegt vorzugsweise in einem Bereich von 0,1 nm bis 1 mm. Vorzugsweise stellt die jeweilige Prägestruktur jedoch eine Mikro- und/oder Nanostruktur dar. Mikrostrukturen sind dabei Strukturen - sowohl hinsichtlich Strukturbreite als auch Strukturhöhe - mit Ausprägungen im Mikrometerbereich. Nanostrukturen sind dabei Strukturen - sowohl hinsichtlich Strukturbreite als auch Strukturhöhe - mit Ausprägungen im Nanometerbereich. Mikro- und Nanostrukturen sind dabei Strukturen, die eine Strukturbreite im Nanometerbereich und eine Strukturhöhe im Mikrometerbereich oder umgekehrt aufweisen. Die Begriffe Strukturhöhe und Strukturtiefe sind dabei austauschbar.

Vorzugsweise liegt die Strukturbreite der jeweiligen Prägestruktur in einem Bereich von 10 nm bis 500 $\mu$m, besonders bevorzugt in einem Bereich von 25 nm bis 400 $\mu$m, ganz besonders bevorzugt in einem Bereich von 50 nm bis 250 $\mu$m, insbesondere in einem Bereich von 100 nm bis 100 $\mu$m. Vorzugsweise liegt die Strukturhöhe der jeweiligen Prägestruktur in einem Bereich von 10 nm bis 500 $\mu$m, besonders bevorzugt in einem Bereich von 25 nm bis 400 $\mu$m, ganz besonders bevorzugt in einem Bereich von 50 nm bis 300 $\mu$m, insbesondere in einem Bereich von 100 nm bis 200 $\mu$m. Dies gilt jeweils sowohl für die Prägestruktur des Verbunds (F1B1) als auch des Verbunds (F2B2).

Die Strukturbreite und Strukturhöhe der jeweiligen Prägestruktur wird dabei gemäß durch eine mechanische Abtastung der Oberfläche bestimmt. Dabei wird die Prägehöhe an mindestens 10 Stellen in einer Linie gleichmäßig über die Bahnbreite der Probe verteilt gemessen, wobei darauf geachtet werden muss, dass das Abtastgerät die Prägestruktur nicht zusammendrückt. Die Bestimmung der Strukturhöhe stellt eine Bestimmung der Abformgenauigkeit dar und erfolgt mittels Rasterkraftmikroskopie gemäß der nachstehend beschriebenen Methode.

*Alternative (i) umfassend Schritte (1-i) und (2-i)*

Das erfindungsgemäße Verfahren gemäß Alternative (i) umfasst wenigstens die Schritte (1-i), (2-i) und (3) sowie optional (4).

*Schritt (1-i)*

Schritt (1-i) des erfindungsgemäßen Verfahrens sieht ein Applizieren eines Beschichtungsmittels (B2a) auf

wenigstens einen Teil einer Oberfläche eines Substrats (F2) vor. Das Substrat (F2) stellt ein Trägermaterial für das darauf aufzubringende Beschichtungsmittel (B2a) bzw. die darauf aufzubringende Beschichtung (B2) dar.

Das Substrat (F2) oder - falls ein beschichtetes Substrat eingesetzt wird - die an der Oberfläche des Substrats (F2) befindliche Schicht besteht vorzugsweise aus wenigstens einem thermoplastischen Polymer, insbesondere ausgewählt aus der Gruppe bestehend aus Polymethyl(meth)acrylaten, Polybutyl(meth)acrylaten, Polyethylenterephthalaten, Polybutylenterephthalaten, Polyvinylidenflouriden, Polyvinylchloriden, Polyestern einschließlich Polycarbonaten und Polyvinylacetat, vorzugsweise Polyestern wie PBT und PET, Polyamiden, Polyolefinen wie Polyethylen, Polypropylen, Polystyrol sowie Polybutadien, Polyacrylnitril, Polyacetal, Polyacrylnitrilethylen-propylendienstyrolcopolymeren (A-EPDM), Polyetherimiden, Phenolharzen, Harnstoffharzen, Melaminharzen, Alkydharzen, Epoxidharzen, Polyurethanen einschließlich TPU, Polyetherketonen, Polyphenylensulfiden, Polyethern, Polyvinylalkoholen und deren Mischungen. Besonders bevorzugte Substrate oder an deren Oberfläche befindliche Schichten sind Polyolefine wie z.B. PP (Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-StyrolCopolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt ist PET, PBT, PP, PE und Polymethylmethacrylat (PMMA) oder schlagzähmodifiziertes PMMA. Insbesondere bevorzugt wird ein Polyester, am meisten bevorzugt PET als Material für das Substrat (F2) eingesetzt. Alternativ kann das Substrat (F2) selbst - gegebenenfalls trotz einer darauf aufgebrachten Schicht aus wenigstens einem der vorstehend genannten Polymere - aus einem anderen Material wie Glas, Keramik, Metall, Papier und/oder Gewebe gefertigt sein. In diesem Fall stellt das Substrat (F2) vorzugsweise eine Platte dar und kann beispielsweise in einer Rolle-zu-Platte-Prägevorrichtung eingesetzt werden.

Die Dicke des Substrates (F2) beträgt vorzugsweise 2 $\mu$m bis zu 5 mm. Besonders bevorzugt ist eine Schichtdicke von 25 bis 1.000 $\mu$m, insbesondere 50 bis 300 $\mu$m.

Bei dem Substrat (F2) handelt es sich vorzugsweise um eine Folie, besonders bevorzugt um eine Folienbahn, ganz besonders bevorzugt um eine Endlos-Folienbahn. In diesem Fall kann das Substrat (F2) vorzugsweise in einer Rolle-zu-Rolle-Prägevorrichtung eingesetzt werden.

Der Begriff "Endlos-Folie" oder "Endlos-Folienbahn" bezeichnet im Sinne der vorliegenden Erfindung vorzugsweise eine Folie mit einer Länge von 100 m bis 10 km.

Vorzugsweise wird das Substrat (F2) bei der Durchführung des Schritts (1-i) (und vorzugsweise auch bei der Durchführung der Schritte (2-i), (3) und (4) des Verfahrens sowie auch bei der Durchführung der Schritte (1-ii), (2-ii), (3) und (4) des Verfahrens der Alternative (ii)) bewegt und ist daher ein bewegtes Substrat. Vorzugsweise wird das Substrat (F2) während der Durchführung von Schritt (1-i) und (2-ii) mittels einer Transporteinrichtung wie einem Fließband bewegt. Die entsprechende zur Durchführung von Schritt (1-i) und auch Schritt (2-ii) eingesetzte Vorrichtung umfasst daher vorzugsweise eine solche Transporteinrichtung. Die entsprechende zur Durchführung von Schritt (1-i) eingesetzte Vorrichtung umfasst ferner ein Mittel zum Applizieren des vorzugsweise strahlenhärtbaren Beschichtungsmittels (B2a) auf wenigstens einen Teil einer Oberfläche des Substrats (F2). Für die entsprechende zur Durchführung von Schritt (2-ii) eingesetzte Vorrichtung gilt analoges.

*Schritt (2-i)*

Schritt (2-i) des erfindungsgemäßen Verfahrens sieht ein zumindest teilweises Prägen des zumindest teilweise auf die Oberfläche des Substrats (F2) applizierten Beschichtungsmittels (B2a) mittels wenigstens eines wenigstens eine Prägematrize (p2) aufweisenden Prägewerkzeugs (P2) vor, wobei die Prägematrize (p2) einen Verbund (B1F1) aus einem Substrat (F1) und einer zumindest teilweise geprägten und zumindest teilweise ausgehärteten Beschichtung (B1) umfasst, wobei nach der zumindest teilweisen Prägung ein Verbund (F2B2aB1F1) erhalten wird. Vorzugsweise wird das Prägewerkzeug (P2) einschließlich der Prägematrize (p2) während der Durchführung von Schritt (2-i) wenigstens teilweise auf das applizierte Beschichtungsmittel (B2a) gepresst.

Vorzugsweise ist die in Schritt (2-i) eingesetzte Prägematrize (p2) des Prägewerkzeugs (P2) wiederverwertbar und wiederholt zur Übertragung wenigstens einer Prägestruktur einsetzbar, vorzugsweise innerhalb des erfindungsgemäßen Verfahrens, wenn dieses zwingend den Schritt (4) umfasst. Vorzugsweise werden durch Schritt (2-i) Mikro- und/oder Nanostrukturen als Prägestruktur auf das Beschichtungsmittel (B2a) übertragen.

Vorzugsweise handelt es sich bei der Prägematrize (p2), also bei dem Verbund (F1B1), um eine Folienbahn (F1), die eine zumindest teilweise geprägte und zumindest teilweise ausgehärtete Beschichtung (B1) aufweist. Besonders bevorzugt ist das Substrat (F1) eine Endlos-Folienbahn, die die zumindest teilweise geprägte und zumindest teilweise ausgehärtete Beschichtung (B1) aufweist, wodurch der als Prägematrize (p2) eingesetzte Verbund (F1B1) eine Endlos-Prägematrize darstellt, und zwar insbesondere dann, wenn auch das Substrat (F2) eine Endlos-Folienbahn ist.

Die wenigstens eine Prägematrize (p2) des zur zumindest teilweisen Prägung gemäß Schritt (2-i) eingesetzten

Prägewerkzeugs (P2) weist eine "Negativstruktur" ("Negativform") auf, d.h. sowohl das Spiegelbild derjenigen Prägestruktur, die der nach Durchführung von optionalem Schritt (4) des erfindungsgemäßen Verfahrens erhaltene Verbund (F2B2) aus einem Substrat (F2) und einer zumindest teilweise geprägten und vollständig ausgehärteten Beschichtung (B2) aufweist, als auch das Spiegelbild der Prägestruktur der Prägematrize (p1) des Prägewerkzeugs (P1).

Die entsprechende zur Durchführung von Schritt (2-i) eingesetzte Vorrichtung umfasst ein Mittel zum zumindest teilweisen Prägen des zumindest teilweise auf die Oberfläche des Substrats (F2) applizierten Beschichtungsmittels (B2a) mittels wenigstens eines Prägewerkzeugs (P2) auf. Ferner weist die eingesetzte Vorrichtung vorzugsweise ein Mittel zum Pressen von (P2) auf das vorzugsweise als Endlos-Folienbahn eingesetzte Substrat (F2) nach dem Applizieren des strahlenhärtbaren Beschichtungsmittels (B2a) auf (F2) auf, welches vorzugsweise in Förderrichtung des Substrats (F2) gesehen hinter dem Mittel zum Applizieren des strahlenhärtbaren Beschichtungsmittels (B2a) gelegen ist.

Die zumindest teilweise Prägung gemäß Schritt (2-i) des erfindungsgemäßen Verfahrens wird mittels eines Prägewerkzeugs (P2) durchgeführt. Bei (P2) kann es sich vorzugsweise um einen Prägekalander handeln, welcher vorzugsweise ein Rasterauftragswerk, besonders bevorzugt ein Rasterwalzwerk umfasst. Dieser Kalander verfügt vorzugsweise in Höhenrichtung übereinander in einem bestimmten Abstand angeordnete, gegensinnig, d.h. gegenläufig, oder mitläufig drehende Walzen, wobei der mit einer Prägestruktur zu versehene Verbund (F2B2a) den Walzen zugeführt und durch den sich ausbildenden Walzenspalt hindurchgeführt wird, wobei die Spaltweite variabel einstellbar ist. Das Rasterwalzwerk umfasst dabei vorzugsweise eine erste Walze wie eine metallische Walze, beispielsweise eine Stahlwalze oder eine Nickelwalze, oder aber eine Quarz-basierte Walze oder eine mit wenigstens einem Kunststoff beschichtete Walze. Die erste Walze fungiert als Prägewalze (Druckwalze). Das Rasterwalzwerk umfasst dabei vorzugsweise eine zweite Walze (Andruckwalze oder Anpresswalze). Die erste Walze, fungiert dabei als Prägewerkzeug (P2) und enthält die Negativform der in die Oberfläche des Verbunds (F2B2a) einzuprägenden Prägestruktur. Dazu ist das Prägewerkzeug (P2) mit einem Verbund (F1B1) als Prägematrize (p2) versehen, die diese Negativform darstellt. Die Erstellung der Negativform der einzuprägenden Struktur auf dem Prägewerkzeug (P2) erfolgt nach den dem Fachmann bekannten und üblichen Verfahren, wobei je nach Struktur und Materialien spezifische Verfahren besonders vorteilhaft sein können. Vorzugsweise wird dies erfindungsgemäß dadurch realisiert, dass die Prägewalze als Prägewerkzeug (P2) fungiert und den als Prägematrize (p2) eingesetzten Verbund (F1B1) in Form einer beschichteten und zumindest teilweise geprägten Folie, vorzugsweise Folienbahn, besonders bevorzugt sich vorzugsweise bewegenden Endlos-Folienbahn umfasst. Mittels der Andruckwalze wird gegenläufig der zu prägende Verbund (F2B2a) bewegt. An dem Punkt des Walzenspaltes, der durch die in einem bestimmten Abstand zueinander angeordneten, gegensinnig drehenden Walzen gebildet wird, erfolgt die Prägung gemäß Schritt (2-i). Die erste Walze, die den als Prägematrize (p2) fungierenden Verbund (F1B1) führt, dient dabei der Prägung des Verbunds (F2B2a), der von der dieser Prägewalze gegenüberliegenden zweiten Walze geführt wird, welche den mit einer Prägestruktur zu versehenden Verbund (F2B2a) gegen die erste Prägewalze drückt. Wie bereits vorstehend ausgeführt können die Strukturen auf der Prägewalze - also die der Prägematrize (p2) - entweder eine durchgehende Struktur haben oder aber als unterbrochene Struktur (Abfolge von Einzelprägestrukturen) ausgebildet sein, wobei auch eine Kombination beider Strukturen möglich ist. Die jeweiligen Strukturen auf der Prägewalze können die unterschiedlichsten geometrischen Formen aufweisen, je nach beabsichtigter Struktur des Verbundes. Falls erforderlich kann Schritt (2-i) bei erhöhter Temperatur, z.B. bei 30 bis 100°C oder zumindest bis 80°C, durchgeführt werden. In diesem Fall durchläuft der zu prägende Verbund (F2B2a) zunächst ein Heizwalzwerk, danach erfolgt gegebenenfalls eine Bestrahlung mit Infrarot-Licht, bevor der vorstehend beschriebene eigentliche Prägevorgang erfolgt. Nach der Prägung durchläuft der dann geprägte Verbund (F2B2a) gegebenenfalls zur Abkühlung ein Kühlwalzwerk. Alternativ kann Schritt (2-i) auch unter Kühlen erfolgen: In diesem Fall durchläuft der zu prägende Verbund (F2B2a) zunächst ein Kühlwalzwerk, bevor der vorstehend beschriebene eigentliche Prägevorgang erfolgt.

Vorzugsweise ist der in Schritt (2-i) als Prägematrize (p2) eingesetzte Verbund (F1B1) ein Verbund aus einer Folienbahn (F1) und einer darauf aufgebrachten und zumindest teilweise geprägten und zumindest teilweise ausgehärteten Beschichtung (B1).

Vorzugsweise wird der in Schritt (2-i) als Prägematrize (p2) eingesetzte Verbund (F1B1) während der Durchführung von Schritt (2-i) über eine als Prägewerkzeug (P2) fungierende erste Walze geführt und der Verbund (F2B2a) wird über eine zweite Walze geführt wird, die der ersten Walze gegenüberliegt und dieser gegenläufig oder zu dieser mitläufig ist, vorzugsweise gegenläufig ist.

Vorzugsweise erfolgt die zumindest teilweise Prägung gemäß Schritt (2-i) auf Höhe des Walzenspalts, der durch die beiden einander gegenüberliegenden, gegensinnig oder in die gleiche Richtung drehenden Walzen gebildet wird, wobei die zumindest teilweise geprägte Beschichtung (B1) des Verbunds (B1F1) dem Beschichtungsmittel (B2a) des Verbunds (F2B2a) zugewandt ist. Die zumindest teilweise Prägung wird dabei vorzugsweise durch Andrücken oder Anpressen des Verbunds (F1B1) auf den Verbund (F2B2a) erzielt.

Der in Schritt (2-i) als Prägematrize (p2) eingesetzte Verbund (F1B1) aus Substrat (F1) und zumindest teilweise geprägter und zumindest teilweise ausgehärteter Beschichtung (B1) wird nachfolgend auch als "Mastersubstrat" oder "Masterfilm" bezeichnet. Handelt es sich bei dem Substrat (F1) um eine Folie, wird der entsprechende Masterfilm als "Masterfolie" bezeichnet. Handelt es sich bei dem Substrat (F1) um eine Folienbahn, wird der entsprechende Masterfilm

als "Masterfolienbahn" bezeichnet. Die Beschichtung (B1) des Masterfilms wird nachfolgend auch als "zumindest teilweise ausgehärteter Masterlack" oder "Masterlackschicht" und das zur Herstellung des ausgehärteten Masterlacks eingesetzte Beschichtungsmittel (B1a) als "Masterlack" bezeichnet. Vorzugsweise befindet sich zwischen (F1) und (B1) des Verbunds (F1B1) keine weitere (Lack)schicht. Es ist aber möglich, dass zwischen (F1) und (B1) des Verbunds (F1B1) wenigstens eine Haftvermittlerschicht vorhanden ist, die in diesem Fall vorzugsweise durchlässig für UV-Strahlung ist.

Der als Prägematrize eingesetzte Verbund (F1B1) kann optional vor Durchführung des Schrittes (2-i) mit dem eingesetzten Beschichtungsmittel (B2a) vorbehandelt werden. Ein solche Vorbehandlung umfasst oder ist vorzugsweise ein Benetzen der Prägematrize mit dem Beschichtungsmittel (B2a).

*Schritt (3)*

Schritt (3) des erfindungsgemäßen Verfahrens sieht ein zumindest teilweises Aushärten des Beschichtungsmittels (B2a) innerhalb des nach Schritt (2-i) oder Schritt (2-ii) erhaltenen Verbunds (F2B2aB1F1) unter Erhalt eines Verbunds (F2B2B1F1) vor, wobei das Beschichtungsmittel (B2a) während der gesamten Dauer der zumindest teilweisen Aushärtung in Kontakt mit dem als Prägematrize (p2) eingesetzten Teilverbund (B1F1) innerhalb des Verbunds (F2B2aB1 F1) ist.

Vorzugsweise werden die Schritte (2-i) und (3) zeitgleich durchgeführt. Dabei erfolgt die zumindest teilweise Aushärtung gemäß Schritt (3) während der Durchführung von Schritt (2-i) vorzugsweise *in situ*.

Die entsprechende zur Durchführung von Schritt (3) eingesetzte Vorrichtung umfasst daher vorzugsweise wenigstens eine Strahlungsquelle zum Bestrahlen des Beschichtungsmittels (B2a) mit einer Härtungsstrahlung. Da das Beschichtungsmittel (B2a) vorzugsweise ein UV-strahlenhärtbares Beschichtungsmittel ist, wird als Härtungsstrahlung vorzugsweise UV-Strahlung eingesetzt. Wenn das Beschichtungsmittel (B2a) nicht strahlenhärtbar ist, ist es vorzugsweise chemisch härtbar. In diesem Fall erfolgt die Aushärtung gemäß Schritt (3) thermisch, beispielsweise durch Einsatz geeigneter Wärmestrahler. Auch eine kombinierte Aushärtung, d.h. eine thermische Aushärtung und eine Aushärtung mittels UV-Strahlung ist selbstverständlich möglich.

Als Strahlungsquellen für die Strahlungshärtung geeignet sind z.B. Quecksilber-Niederdruckstrahler, -Mitteldruckstrahler, Hochdruckstrahler sowie Leuchtstoffröhren, Impulsstrahler, Metallhalogenidstrahler (Halogenlampen), Laser, LED und zudem Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht oder durch Bestrahlung mit energiereichen Elektronen. Die üblicherweise zur Vernetzung ausreichende Strahlungsdosis bei UV-Härtung liegt im Bereich von 80 bis 3.000 $mJ/cm^2$. Selbstverständlich sind auch mehrere Strahlungsquellen für die Härtung einsetzbar, z.B. zwei bis vier. Diese können auch in jeweils unterschiedlichen Wellenlängenbereichen strahlen.

Vorzugsweise erfolgt die zumindest teilweise Härtung in Schritt (3) durch Bestrahlung durch das Substrat (F2) hindurch. Dabei ist es vorteilhaft, dass die Durchlässigkeit des Substrats (F2) für die eingesetzte Strahlung abgestimmt ist auf den eingesetzten wenigstens einen Photoinitiator, der vorzugsweise in dem Beschichtungsmittel (B2a) vorhanden ist. So ist beispielsweise das Material PET als Substrat (F2), also z.B. eine PET-Folie, durchlässig für Strahlung mit einer Wellenlänge unterhalb 400 nm. Als Photoinitiatoren, die bei dieser Strahlung Radikale erzeugen, kommen beispielsweise 2,4,6-Trimethylbenzoyldiphenylphosphinoxid, Ethyl-2,4,6-trimethylbenzoylphenylphosphinat und Bis-(2,4,6-trimethylbenzoyl)-phenylphosphinoxid in Betracht. Vorzugsweise ist daher in diesem Fall wenigstens ein solcher Photoinitiator in dem Beschichtungsmittel (B2a) vorhanden.

*Optionaler Schritt (4)*

Schritt (4) des erfindungsgemäßen Verfahrens sieht ein optionales Entfernen des Verbunds (F2B2) innerhalb des Verbunds (F2B2B1 F1) von dem als Prägematrize (p2) eingesetzten Verbund (B1F1) vor. Dadurch kann ein Verbund (F2B2) aus Substrat (F2) und zumindest teilweise geprägter und zumindest teilweise ausgehärteter Beschichtung (B2) erhalten werden. Vorzugsweise wird Schritt (4) durchgeführt.

*Alternative (ii)*

Das erfindungsgemäße Verfahren gemäß Alternative (ii) umfasst wenigstens die Schritte (1-ii), (2-ii) und (3) sowie optional (4). Die Schritte (3) und (4) wurden vorstehend bereits im Zusammenhang mit Alternative (i) beschrieben.

*Schritt (1-ii)*

Schritt (1-ii) des erfindungsgemäßen Verfahrens sieht ein Applizieren eines Beschichtungsmittels (B2a) auf

wenigstens einen Teil einer zumindest teilweise geprägten Oberfläche eines als eine Prägematrize (p2) eines Prägewerkzeugs (P2) eingesetzten Verbunds (B1F1) aus einem Substrat (F1) und einer zumindest teilweise geprägten und zumindest teilweise ausgehärteten Beschichtung (B1) unter Erhalt eines Verbunds (B2aB1 F1) vor.

Der als Prägematrize eingesetzte Verbund (F1B1) kann optional vor Durchführung des Schrittes (1-ii) mit dem eingesetzten Beschichtungsmittel (B2a) vorbehandelt werden. Ein solche Vorbehandlung umfasst oder ist vorzugsweise ein Benetzen der Prägematrize mit dem Beschichtungsmittel (B2a).

*Schritt (2-ii)*

Schritt (2-ii) des erfindungsgemäßen Verfahrens sieht ein Applizieren eines Substrats (F2) auf wenigstens einen Teil der durch (B2a) gebildeten Oberfläche des Verbunds (B2aB1F1) unter Erhalt eines Verbunds (F2B2aB1 F1) vor.

Vorzugsweise wird der in Schritt (1-ii) als Prägematrize (p2) eingesetzte Verbund (B1F1) nach der Applikation des Beschichtungsmittels (B2a) auf wenigstens einen Teil seiner zumindest teilweise geprägten Oberfläche unter Erhalt des Verbunds (B2aB1F1) während der Durchführung von Schritt (2-ii) über eine als Prägewerkzeug (P2) fungierende erste Walze geführt und das innerhalb von Schritt (2-ii) eingesetzte Substrat (F2) über eine zweite Walze geführt wird, die der ersten Walze gegenüberliegt und dieser gegenläufig oder zu dieser mitläufig, vorzugsweise gegenläufig, ist.

Vorzugsweise erfolgt die zumindest teilweise Prägung gemäß Schritt (2-ii) auf Höhe des Walzenspalts, der durch die beiden einander gegenüberliegenden, gegensinnig oder in die gleiche Richtung drehenden Walzen gebildet wird, wobei das Beschichtungsmittel (B2a) des Verbunds (B2aB1F1) dem Substrat (F2) zugewandt ist. Die zumindest teilweise Prägung wird dabei vorzugsweise durch Andrücken oder Anpressen des Substrats (F2) auf den Verbund (B2aB1 F1) erzielt.

In Fig. 1 ist schematisch eine seitliche Ansicht einer Vorrichtung dargestellt, die zur Durchführung der Schritte (1-i) und (2-i) sowie (3) und optional (4) des erfindungsgemäßen Verfahrens eingesetzt werden kann und an der das erfindungsgemäße Verfahren beispielhaft illustriert ist. Gleichermaßen kann diese Vorrichtung in grundsätzlich analoger Weise auch zur Durchführung der Schritte (1-ii) und (2-ii) sowie (3) und optional (4) des erfindungsgemäßen Verfahrens eingesetzt werden. Mittels dieser Vorrichtung können Strukturen wie Mikro- und/oder Nanostrukturen vorzugsweise von einer als Masterfilm vorliegenden Prägematrize (F1B1, p2) auf ein mit (B2a) beschichtetes Substrat (F2) übertragen werden. Diese Vorrichtung wird daher auch allgemein als Transfervorrichtung bezeichnet und ist in Fig. 1 mit dem Bezugszeichen (10) versehen.

In der Transfervorrichtung (10) ist als Herzstück ein Prägebereich (1) ausgebildet, in welchem eine Druckwalze (2) mit einem Walzenmantel aus einem Quarzglas angeordnet ist. Die Druckwalze (2) wird zur Rotation angetrieben. Neben der Druckwalze (2) ist eine Strahlungsquelle als Beleuchtungseinheit (3) angeordnet, die UV-Licht erzeugt und insbesondere eine in Längsrichtung der Druckwalze (2) angeordnete Reihe aus UV-LEDs umfassen kann. Wie in Fig. 1 dargestellt, kann die Beleuchtungseinheit (3) auch im Inneren der Druckwalze (2) angeordnet sein. Gegen die Druckwalze (2) gedrückt ist eine Andruckwalze (4) im Prägebereich (1) angeordnet. In einem Matrizengestell (5) der Transfervorrichtung (10) sind zwei Folienbahnrollen (6) und (7) angeordnet, die motorisch zur Rotation angetrieben werden können. Selbstverständlich können die Folienbahnrollen (6) und (7) auch in anderer Weise gelagert und angeordnet sein als in einem Matrizengestell (5), z.B. in einem schrankartigen Element oder auch außerhalb der eigentlichen Transfervorrichtung (10). Auf den hier in als in dem Matrizengestell angeordnet gezeigten Folienbahnrollen (6) und (7) ist eine Masterfolienbahn (8) aufgerollt, die eine Endlos-Prägematrize darstellt. Die Masterfolienbahn (8) ist auf einer Übertragungsoberfläche mit einer Masterlackschicht versehen, in der Negativformen von zu übertragenden Mikro- und/oder Nanostrukturen als Oberflächenrelief eingebracht sind. Die Masterlackschicht ist zumindest teilweise gehärtet, so dass die reliefartigen Strukturierungen darin beständig sind. Die Masterfolienbahn (8) kann durch Durchführung der Schritte (5) bis (8) des erfindungsgemäßen Verfahrens erhalten werden und stellt somit einen Verbund (F1B1) dar. Die Masterfolienbahn (8) läuft von der ersten Folienbahnrolle (6) ab, wird über verschiedene Umlenkrollensysteme dem Prägebereich (1) zugeführt und läuft, wie in Fig. 1 zu erkennen ist, lotrecht von oben her in den Bereich zwischen der Druckwalze (2) und der Andruckwalze (4) ein. Dort wird sie über einen Abschnitt des Umfanges der Druckwalze (2) straff anliegend geführt, verlässt dann wiederum die Druckwalze (2) und wird, erneut über Umlenkrollensysteme mit Bahnspannern der zweiten Folienbahnrolle (7) zugeführt und auf dieser aufgewickelt. Eine das mit Strukturen wie Mikro- und/oder Nanostrukturen zu versehene Substrat (F2) bildende Folienbahn (9) wird ausgehend von einer Folienbahnrolle (11), auch hier über verschiedene Umlenkrollensysteme mit Bahnstraffer dem Prägebereich (1) zugeführt, läuft dort straff über einen Umfangsabschnitt der Andruckwalze (4) und von dort in den Bereich der Anlage der Andruckwalze (4) an der Druckwalze (2) bzw. in den Bereich des zwischen diesen Elementen gebildeten Walzenspaltes ein. Die Folienbahn (9) verlässt diesen Bereich in der Darstellung nach Fig. 1 lotrecht nach unten und wird - erneut geführt über Umlenkrollensysteme und Bahnstraffer - zu einer Folienbahnrolle (12) geführt, auf der diese als fertig behandeltes Produkt aufgewickelt wird. Auf ihrem Weg in den Prägebereich (1) bzw. hin zu dem Walzenspalt zwischen der Druckwalze (2) und der Andruckwalze (4) wird mit einer hier außerhalb des Druckbereichs (1) angeordneten Lackauftragseinheit (27) die Folienbahn (9) auf

ihrer im Druckbereich (1) der Druckwalze (2) zugewandten Oberfläche mit einer Lackschicht versehen. Durch die Lackauftragseinheit (27) wird somit gemäß Schritt (1-i) des erfindungsgemäßen Verfahrens ein Beschichtungsmittel (B2a) auf die als (F2) eingesetzte Folienbahn (9) appliziert. Im Druckbereich (1) wird dann die Folienbahn (9) mit ihrer mit der noch nicht gehärteten Lackschicht versehenen Oberfläche mit der mit der Masterlackschicht versehenen Oberfläche der Masterfolienbahn (8) zur Durchführung von Schritt (2-i) des erfindungsgemäßen Verfahrens zusammengebracht. Dabei läuft die Folienbahn (9) über die Andruckwalze (4), die Masterfolienbahn (8) über die Druckwalze (2). Beide Bahnen, die Folienbahn (9) und die Masterfolienbahn (8) sind mit ihren mit der jeweiligen Lackschicht (bei der Masterfolienbahn (8) die zumindest teilweise gehärtete Masterlackschicht, die der Beschichtung (B1) entspricht, bei der Folienbahn (9) die ungehärtete Lackschicht, die dem Beschichtungsmittel (B2a) entspricht) versehenen Oberflächen einander zugewandt. In dem Bereich, in dem die Andruckwalze (4) gegen die Druckwalze (2) gedrückt ist, wird das Negativabbild der zu übertragenden Strukturen wie Mikro- und/oder Nanostrukturen, das in der Masterlackschicht (B1) ausgebildet ist, in die ungehärtete Lackschicht, die dem Beschichtungsmittel (B2a) entspricht, eingedrückt, wodurch die Strukturen übertragen werden. Zugleich erfolgt durch die Beleuchtungseinheit (2) eine UV-Beleuchtung und somit ein zumindest teilweises Aushärten der ungehärteten Lackschicht, die dem Beschichtungsmittel (B2a) der Lackschicht auf der Folienbahn (9) entspricht, solange diese Lackschicht noch mit der Masterlackschicht (8) in Kontakt ist. So wird unmittelbar beim Übertragen der Strukturen und *in situ* die zumindest teilweise Härtung der Lackschicht durchgeführt. Die Bestrahlung der Folienbahn (9), bzw. der auf dieser aufgebrachten ungehärteten Lackschicht erfolgt dabei durch das Folienmaterial (9) hindurch bei Bestrahlung von außen auf den Druckzylinder (2). Alternativ erfolgt die Bestrahlung durch das Quarzglasmaterial der Mantelfläche des Druckzylinders (2) und auch durch das Material der Masterfolienbahn (8) und der darauf aufgebrachten Masterlackschicht hindurch. Entsprechend sind Masterfolienbahn (8) und Masterlackschicht für die verwendete Strahlung, hier UV-Licht, durchlässig gestaltet. Die Mantelfläche der Druckwalze (2) ist hier als aus Quarzglas bestehend beschrieben. Grundsätzlich kommt hier aber auch ein anderes Material in Frage, solange dieses für die aus dem Inneren der Druckwalze (2) abgegebene Härtungsstrahlung (die eine andere sein kann als UV-Licht) durchlässig ist. Alternativ kann anstelle der Beleuchtungseinheit (3), die UV-Beleuchtung liefert, beispielsweise auch ein thermischer Wärmestrahler eingesetzt werden, wenn es sich bei dem Beschichtungsmittel (B2a) um ein nicht strahlenhärtendes Beschichtungsmittel handelt. Es ist im Anschluss an die zumindest teilweise Härtung durch UV-Beleuchtung eine optionale Nachbelichtung möglich, z.B. mittels IR-Strahlung. Am Ende dieses Härtungsprozesses gemäß optionalem Schritt (4) des erfindungsgemäßen Verfahrens trennen sich die Folienbahn (9) und die Masterfolienbahn (8) unter Trennung der jeweils nun strukturierten Schichtverbünde (F2B2) und Masterfilm (F1B1). Die so mit der gewünschten Strukturierung versehene beschichtete Folienbahn (9) (d.h. der Verbund (F2B2)) wird als fertiges Produkt der Folienbahnrolle (12) zugeführt und auf dieser aufgewickelt. Wird von außen auf die Druckwalze (2) mittels einer Beleuchtungseinheit (3) beleuchtet, so kann die mit der gewünschten Strukturierung versehene beschichtete Folienbahn (9) (d.h. der Verbund (F2B2)) auch opak sein, wenn die Anordnung so gewählt wird, dass die Masterfolienbahn (8) (also der Verbund (F1B1)) und die Folienbahn (9) (also der Verbund (F2B2)) vertauscht werden. Die Lackierung an der Lackauftragseinheit (27) gemäß Schritt (1-i) des erfindungsgemäßen Verfahrens kann dann ohne Einschränkung des Prozesses auf die Masterfolienbahn (8) erfolgen.

*Optionale Schritte (5) bis (8) des erfindungsgemäßen Verfahrens zur Herstellung des als Prägematrize (p2) eingesetzten Verbunds (F1B1)*

Vorzugsweise ist der in Schritt (2-i) und Schritt (1-ii) des Verfahrens eingesetzte Verbund (F1B1) aus einem Substrat (F1) und einer zumindest teilweise geprägten und zumindest teilweise ausgehärteten Beschichtung (B1) wenigstens erhältlich durch die nachfolgend näher spezifizierten Schritte (5) bis (8). Die Schritte (5) bis (8) des erfindungsgemäßen Verfahrens werden somit zur Herstellung des als Prägematrize (p2) eingesetzten Verbunds (F1B1) durchgeführt. In **Fig. 2** sind die Schritte (5) bis (8) des erfindungsgemäßen Verfahrens beispielhaft illustriert, wie auch der nachstehenden Beschreibung dieser Figur zu entnehmen ist.

*Schritt (5)*

Schritt (5) des erfindungsgemäßen Verfahrens sieht ein Applizieren eines strahlenhärtbaren Beschichtungsmittels (B1a) auf wenigstens einen Teil einer Oberfläche eines Substrats (F1) vor. Das Substrat (F1) stellt ein Trägermaterial für das darauf aufzubringende Beschichtungsmittel (B1a) bzw. die darauf aufzubringende Beschichtung (B1) dar. Das Substrat (F1) kann beschichtet sein. Als Material für das Substrat (F1) oder für deren Oberflächenschicht kommen die gleichen Materialen in Betracht, die auch zur Herstellung des Substrats (F2) eingesetzt werden können und bereits vorstehend erwähnt worden sind. Auf die entsprechenden Passagen wird hiermit explizit verwiesen. Bei dem Substrat (F1) handelt es sich vorzugsweise um eine Folie, besonders bevorzugt um eine Folienbahn, ganz besonders bevorzugt um eine Endlos-Folienbahn. Bevorzugtes Material für das Substrat (F1) ist Polyester, insbesondere PET. Die Dicke des Substrates (F1) beträgt vorzugsweise 2 μm bis zu 5 mm. Besonders bevorzugt ist eine Schichtdicke von 25

bis 1.000 μm, insbesondere 50 bis 300 μm.

Vorzugsweise wird das Substrat (F1) bei der Durchführung des Schrittes (5) (und vorzugsweise auch bei der Durchführung der Schritte (6), (7) und (8) des Verfahrens) bewegt und ist daher ein bewegtes Substrat. Vorzugsweise wird das Substrat (F1) während der Durchführung von Schritt (5) mittels einer Transporteinrichtung wie einem Fließband bewegt. Die entsprechende zur Durchführung von Schritt (5) eingesetzte Vorrichtung umfasst daher vorzugsweise eine solche Transporteinrichtung. Die entsprechende zur Durchführung von Schritt (5) eingesetzte Vorrichtung umfasst ferner ein Mittel zum Applizieren des vorzugsweise strahlenhärtbaren Beschichtungsmittels (B1a) auf wenigstens einen Teil einer Oberfläche des Substrats (F1).

*Schritt (6)*

Schritt (6) des erfindungsgemäßen Verfahrens sieht ein zumindest teilweises Prägen des zumindest teilweise auf die Oberfläche des Substrats (F1) applizierten Beschichtungsmittels (B1a) mittels wenigstens eines wenigstens eine Prägematrize (p1) aufweisenden Prägewerkzeugs (P1) vor. Durch das zumindest teilweise Prägen wird dabei eine Prägestruktur zumindest teilweise auf die Oberfläche des auf das Substrats (F1) applizierten Beschichtungsmittels (B1a) übertragen. Die Begriffe "Prägung" und "Prägen" wurden bereits vorstehend definiert. Demzufolge wird darunter im Zusammenhang mit (B1a) bzw. (B1) die zumindest teilweise Ausrüstung des Beschichtungsmittels (B1a) als Teil des Verbunds (F1B1a) mit einer Prägestruktur bezeichnet. Dabei wird wenigstens ein bestimmtes Areal des Beschichtungsmittels (B1a) mit einer Prägestruktur ausgerüstet. Vorzugsweise wird die gesamte Oberfläche des Beschichtungsmittels (B1a) als Teil des Verbunds (F1B1a) mit einer Prägestruktur ausgerüstet. Vorzugsweise wird das Prägewerkzeug (P1) während der Durchführung von Schritt (6) wenigstens teilweise auf das applizierte Beschichtungsmittel (B1a) gepresst oder gedrückt.

Vorzugsweise werden durch Schritt (6) Mikro- und/oder Nanostrukturen als Prägestruktur auf das Beschichtungsmittel (B1a) übertragen.

Die entsprechende zur Durchführung von Schritt (6) eingesetzte Vorrichtung umfasst daher ein Mittel zum zumindest teilweisen Prägen des zumindest teilweise auf die Oberfläche des Substrats (F1) applizierten Beschichtungsmittels (B1a) mittels wenigstens eines Prägewerkzeugs (P1) auf. Ferner weist die eingesetzte Vorrichtung vorzugsweise ein Mittel zum Pressen von (P1) auf das vorzugsweise als Endlos-Folienbahn eingesetzte Substrat (F1) nach dem Applizieren des strahlenhärtbaren Beschichtungsmittels (B1a) auf (F1) auf, welches vorzugsweise in Förderrichtung des Substrats (F1) gesehen hinter dem Mittel zum Applizieren des strahlenhärtbaren Beschichtungsmittels (B1a) gelegen ist.

Die zumindest teilweise Prägung gemäß Schritt (6) des erfindungsgemäßen Verfahrens wird mittels eines Prägewerkzeugs (P1) durchgeführt. Bei (P1) kann es sich vorzugsweise um einen Prägekalander handeln, welcher vorzugsweise ein Rasterauftragswerk, besonders bevorzugt ein Rasterwalzwerk umfasst. Dieser Kalander verfügt vorzugsweise in Höhenrichtung übereinander in einem bestimmten Abstand angeordnete, gegensinnig drehende Walzen, wobei der mit einer Prägestruktur zu versehene Verbund (F1B1a) den Walzen zugeführt und durch den sich ausbildenden Walzenspalt hindurchgeführt wird, wobei die Spaltweite variabel einstellbar ist. Das Rasterwalzwerk umfasst dabei vorzugsweise eine erste Walze wie eine metallische Walze beispielweise eine Stahlwalze oder Nickelwalze, und eine zweite Walze. Die erste Walze (Prägewalze) fungiert dabei als Prägewerkzeug (P1) und enthält die Negativform der in die Oberfläche des Verbunds (F1B1a) einzuprägenden Prägestruktur. Dies entspricht der Positivstruktur, die in Schritt (2) des Verfahrens in den Verbund (F2B2a) eingeprägt werden soll. Die zweite Walze dient als Abdruck- bzw. Anpresswalze. Die Erstellung der Positivform der einzuprägenden Struktur auf dem Prägewerkzeug (P1) erfolgt nach den dem Fachmann bekannten und üblichen Verfahren, wobei je nach Struktur und Materialien spezifische Verfahren besonders vorteilhaft sein können. Vorzugsweise wird dies erfindungsgemäß dadurch realisiert, dass die Prägewalze als Prägewerkzeug (P1) fungiert und eine Prägematrize (p1) umfasst. Mittels der Andruckwalze wird gegenläufig der zu prägende Verbund (F1B1a), beispielsweise in Form einer zumindest teilweise mit (B1a) beschichteten Folienbahn, bewegt. An dem Punkt des Walzenspaltes, der durch die in einem bestimmten Abstand zueinander angeordneten, gegensinnig drehenden Walzen gebildet wird, erfolgt die Prägung gemäß Schritt (6). Die erste Walze, die die Prägematrize (p1) führt, dient dabei der Prägung des Verbunds (F1B1a), der von der dieser Prägewalze gegenüberliegenden zweiten Walze geführt wird, welche den mit einer Prägestruktur zu versehenden Verbund (F1B1a) gegen die erste Prägewalze drückt. Falls erforderlich kann Schritt (6) bei erhöhter Temperatur, z.B. bei 30 bis 100°C oder bis 80°C, durchgeführt werden. In diesem Fall durchläuft der zu prägende Verbund (F1B1a) zunächst ein Heizwalzwerk, danach erfolgt gegebenenfalls eine Bestrahlung mit Infrarot-Licht, bevor der vorstehend beschriebene eigentliche Prägevorgang erfolgt. Nach der Prägung durchläuft der dann geprägte Verbund (F1B1a) gegebenenfalls zur Abkühlung ein Kühlwalzwerk. Alternativ kann Schritt (6) auch unter Kühlen erfolgen: In diesem Fall durchläuft der zu prägende Verbund (F1B1a) zunächst ein Kühlwalzwerk, bevor der vorstehend beschriebene eigentliche Prägevorgang erfolgt. Als Prägewerkzeug (P1) kann auch ein herkömmlicher Druckzylinder eingesetzt werden, der die Negativform der in die Oberfläche des Verbunds (F1B1a) einzuprägenden Prägestruktur trägt. Dieser kann zur zumindest teilweisen Prägung auf den Verbund (F1B1a)

gedrückt werden.

Die wenigstens eine Prägematrize (p1) des zur zumindest teilweisen Prägung gemäß Schritt (6) eingesetzten Prägewerkzeugs (P1) weist eine "Positivstruktur" ("Positivform") auf, d.h. diejenige Prägestruktur, die der nach Durchführung von Schritt (4) des erfindungsgemäßen Verfahrens erhaltene Verbund (F2B2) aus einem Substrat (F2) und einer zumindest teilweise geprägten und vollständig ausgehärteten Beschichtung (B2) aufweist. Das Prägewerkzeug (P1) ist vorzugsweise ein metallisches Prägewerkzeug, besonders bevorzugt aus Nickel. Dementsprechend ist die Prägematrize (p1) vorzugsweise metallisch, besonders bevorzugt aus Nickel, insbesondere aus Nickel, welches geringe Mengen an Phosphor enthält. Alternativ können aber auch weiche Materialien wie beispielsweise Polydimethylsiloxane (PDMS) zur Herstellung von (p1) eingesetzt werden. Zudem können Walzen eingesetzt werden, die mit wenigstens einem Kunststoff beschichtet sind. Zudem kann das Prägewerkzeug (P1) einen strukturierten Lack wie einen UV-Lack als Prägematrize aufweisen. Das auf (F1) applizierte Beschichtungsmittel (B1a) weist nach Durchführung von Schritt (6) eine Negativform der zu übertragenden Prägestruktur wie Mikro- und/oder Nanostrukturen auf.

Die Prägematrize des eingesetzten Prägewerkzeugs kann optional vor Durchführung des Schrittes (6) mit dem eingesetzten Beschichtungsmittel (B1a) vorbehandelt werden. Ein solche Vorbehandlung umfasst oder ist vorzugsweise ein Benetzen der Prägematrize mit dem Beschichtungsmittel (B1a).

*Schritt (7)*

Schritt (7) des erfindungsgemäßen Verfahrens sieht ein zumindest teilweises und vorzugsweile vollständiges Aushärten des auf wenigstens einen Teil der Oberfläche des Substrats (F1) applizierten und zumindest teilweise geprägten Beschichtungsmittels (B1a) unter Erhalt eines Verbunds (F1B1) aus Substrat (F1) und zumindest teilweise geprägter und zumindest teilweise ausgehärteter Beschichtung (B1) vor, wobei das Beschichtungsmittel (B1a) während der gesamten Dauer der zumindest teilweisen Aushärtung in Kontakt mit der wenigstens einen Prägematrize (p1) des wenigstens einen Prägewerkzeugs (P1) ist.

Vorzugsweise werden die Schritte (6) und (7) zeitgleich durchgeführt. Dabei erfolgt die Aushärtung gemäß Schritt (7) während der Durchführung von Schritt (6) vorzugsweise *in situ.*

Die entsprechende zur Durchführung von Schritt (7) eingesetzte Vorrichtung umfasst daher vorzugsweise wenigstens eine Strahlungsquelle zum Bestrahlen des strahlenhärtbaren Beschichtungsmittels (B1a) mit einer Härtungsstrahlung, vorzugsweise UV-Strahlung.

Als Strahlungsquellen für die Strahlungshärtung geeignet sind z.B. Quecksilber-Niederdruckstrahler, -Mitteldruckstrahler, Hochdruckstrahler sowie Leuchtstoffröhren, Impulsstrahler, Metallhalogenidstrahler (Halogenlampen), Laser, LED und zudem Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht oder durch Bestrahlung mit energiereichen Elektronen. Die üblicherweise zur Vernetzung ausreichende Strahlungsdosis bei UV-Härtung liegt im Bereich von 80 bis 3.000 $mJ/cm^2$. Selbstverständlich sind auch mehrere Strahlungsquellen für die Härtung einsetzbar, z.B. zwei bis vier. Diese können auch in jeweils unterschiedlichen Wellenlängenbereichen strahlen.

Vorzugsweise erfolgt die Härtung in Schritt (7) durch Bestrahlung durch das Substrat (F1) hindurch. Dabei ist es vorteilhaft, dass die Durchlässigkeit des Substrats (F1) für die eingesetzte Strahlung abgestimmt ist auf den wenigstens einen als Komponente (c) eingesetzten Photoinitiator. So ist beispielsweise das Material PET als Substrat (F1), also z.B. eine PET-Folie, durchlässig für Strahlung mit einer Wellenlänge unterhalb 400 nm. Als Photoinitiatoren, die bei dieser Strahlung Radikale erzeugen, kommen beispielsweise 2,4,6-Trimethylbenzoyldiphenylphosphinoxid, Ethyl-2,4,6-trimethyl-benzoylphenylphosphinat und Bis-(2,4,6-trimethylbenzoyl)-phenylphosphinoxid in Betracht.

*Schritt (8)*

Schritt (8) des erfindungsgemäßen Verfahrens sieht ein Entfernen des Verbunds (F1B1) vom Prägewerkzeug (P1) vor, wodurch das gewünschte Produkt, nämlich der als Prägematrize (p2) eingesetzte Verbund (F1B1) aus Substrat (F1) und zumindest teilweise geprägter und zumindest teilweise ausgehärteter Beschichtung (B1) erhalten wird.

In Fig. 2 ist schematisch eine seitliche Ansicht einer Vorrichtung dargestellt, die zur Durchführung der Schritte (5) bis (8) des erfindungsgemäßen Verfahrens zur Herstellung eines als (p2) eingesetzten Verbunds (F1B1), d.h. zur Herstellung eines Masterfilms, eingesetzt werden kann und an der das erfindungsgemäße Verfahren hinsichtlich der Schritte (5) bis (8) beispielhaft illustriert ist. Mittels dieser Vorrichtung können Strukturen wie Mikro- und/oder Nanostrukturen mittels eines Prägewerkzeugs (P1) auf ein mit (B1a) beschichtetes Substrat (F1) übertragen werden und nach zumindest teilweisem Aushärten ein als Masterfilm einsetzbarer Verbund (F1B1) - innerhalb von **Fig. 2** als Masterfolienbahn (8) bezeichnet - erhalten werden, der wie vorstehend beschrieben in dem im Zusammenhang mit **Fig. 1** illustriertem Verfahren als Prägematrize (p2) eingesetzt werden kann.

Die in **Fig. 2** gezeigte Mastertransfervorrichtung (30) arbeitet nach einem Übertragungsprinzip, bei dem unmittelbar von einem strukturiertem Druckzylinder bzw. einer Druckwalze, die hier ein Masterdruckzylinder (17) ist, die gewünschten Negativ-Strukturen in die auf die Masterfolienbahn (8b) aufgebrachte, noch nicht ausgehärtete Lackschicht eingeprägt - entsprechend einem Verbund (F1B1a) - und diese dann mit den darauf aufgebrachten Strukturen *in situ* mittels einer Beleuchtungseinheit (3) unter Erhalt der Masterfolienbahn (8) - entsprechend einem Verbund (F1B1) - zumindest teilweise gehärtet wird. Die als Substrat (F1) eingesetzte Folienbahn (8a) wird in diesem Verfahren von einer Folienbahnrolle (18), die nur das Trägermaterial, also die reine Folie ohne aufgebrachten Masterlack enthält, abgezogen, über diverse Umlenkrollensysteme und Bahnspannsysteme geführt und in einen Prägebereich (1) der Vorrichtung eingebracht. Dort läuft die Folienbahn (8a) in einen Bereich zwischen einer Andruckwalze (4) und dem Masterdruckzylinder (17) und wird außerhalb des Druckbereichs in der Lackauftragseinrichtung (27) mit der noch nicht ausgehärteten Masterlackschicht (entsprechend dem Beschichtungsmittel B1a) versehen. Dieser Lackauftrag entspricht Schritt (5) des erfindungsgemäßen Verfahrens. In dem Prägebereich (1), in dem die Masterfolienbahn (8b) mit der noch nicht ausgehärteten Masterlackschicht entlang eines Abschnittes der Mantelfläche des Masterdruckzylinders (17) läuft, werden die in dem Masterdruckzylinder (17) in dessen Mantelfläche eingeprägten Mikro- und/oder Nanostrukturen als Negativabbild in die Masterlackschicht der Masterfolienbahn (8b) eingebracht und übertragen. Dies entspricht Schritt (6) des erfindungsgemäßen Verfahrens. Die das ungehärtete Beschichtungsmittel (B1a) aufweisende Masterfolienbahn (8b) wird dann gemäß Schritt (7) des erfindungsgemäßen Verfahrens zumindest teilweise ausgehärtet. Dabei wird *in situ* durch Bestrahlen mit einer Beleuchtungseinheit (3) mittels UV-Strahlung ausgehärtet, z.B. mittels einer Einheit gebildet aus UV-LEDs. Anschließend wird die so erhaltene Masterfolie (8), also der Verbund (F1B1), gemäß Schritt (8) des erfindungsgemäßen Verfahrens von der Mantelfläche des Masterdruckzylinders (17) abgezogen und die so fertig gestellte Masterfolienbahn (8) wird auf eine Folienbahnrolle (19) aufgespult. Die Folienbahnrolle (19) enthält dann die fertige Masterfolienbahn (8) mit der darauf aufgebrachten Masterlackschicht und den darin eingeprägten Negativabbildern der Mikro- und/oder Nanostrukturen. Diese Folienbahnrolle (19) kann entnommen und dann in einer Transfervorrichtung (10) gemäß **Fig. 1** oder in einer anderen, mit gleichem Prinzip arbeitenden Transfervorrichtung als erste Folienbahnrolle (6) eingesetzt werden.

*Erfindungsgemäß eingesetzte Beschichtungsmittel (B1a) und (B2a)*

*Beschichtungsmittel (B1a)*

Das Beschichtungsmittel (B1a) ist ein strahlenhärtbares Beschichtungsmittel. Die Begriffe "strahlenhärtbar" und "strahlenhärtend" sind dabei austauschbar. Unter dem Begriff "Strahlenhärtung" wird vorzugsweise eine radikalische Polymerisation von polymerisierbaren Verbindungen infolge einer elektromagnetischen und/oder korpuskularen Strahlung, beispielsweise (N)IR-Licht im Wellenlänge-bereich von A=>400-1.200 nm, bevorzugt 700-900 nm und/oder UV-Licht im Wellenlängenbereich von $\lambda$=100 bis 400 nm, bevorzugt von $\lambda$=200 bis 400 nm und besonders bevorzugt $\lambda$=250 bis 400 nm und/oder Elektronenstrahlung im Bereich von 150 bis 300 keV und besonders bevorzugt mit einer Strahlungsdosis von mindestens 80, bevorzugt 80 bis 3.000 mJ/cm$^2$ verstanden. Besonders bevorzugt wird mittels UV-Strahlung als Strahlenhärtung gehärtet. Das Beschichtungsmittel (B1a) kann durch Einsatz einer geeigneten Strahlenquelle gehärtet werden. Somit ist (B1a) vorzugsweise ein UV-Strahlen-härtendes Beschichtungsmittel.

Das Beschichtungsmittel (B1a) enthält
die wenigstens eine Komponente (a) in einer Menge in einem Bereich von 40 bis 95 Gew.-%, vorzugsweise in einem Bereich von 45 oder >45 bis 90 Gew.-%, besonders bevorzugt in einem Bereich von 50 oder >50 wie 55 bis 85 Gew.-%, ganz besonders bevorzugt in einem Bereich von 55 oder 60 bis 80 Gew.-%,
das wenigstens eine Additiv als Komponente (b) in einer Menge in einem Bereich von 0,01 bis 5 Gew.-%, vorzugsweise in einem Bereich von 0,05 bis 4,5 Gew.-%, besonders bevorzugt in einem Bereich von 0,1 bis 4 Gew.-%, ganz besonders bevorzugt in einem Bereich von 0,2 oder 0,5 bis 3 Gew.-%,
wenigstens einen Photoinitiator als Komponente (c) in einer Menge in einem Bereich von 0,01 bis 15 Gew.-%, vorzugsweise in einem Bereich von 0,1 bis 12 Gew.-%, besonders bevorzugt in einem Bereich von 0,5 bis 10 Gew.-%,
die wenigstens eine mindestens eine Kohlenstoffdoppelbindung aufweisende Komponente (d) in einer Menge in einem Bereich von 0 bis 45 Gew.-%, vorzugsweise in einem Bereich von 0 bis 40 Gew.-%, besonders bevorzugt in einem Bereich von 0 bis 35 Gew.-%, ganz besonders bevorzugt in einem Bereich von 0 bis 30 Gew.-%,
jeweils bezogen auf das Gesamtgewicht des Beschichtungsmittels (B1a).

Die Gegenwart von Komponente (d) im erfindungsgemäß eingesetzten Beschichtungsmittel (B1a) ist somit lediglich optional, was durch den jeweils vorstehend angegebenen unteren Grenzwert von 0 Gew.-% ersichtlich ist. Vorzugsweise enthält das Beschichtungsmittel (B1a) die Komponente (d) in einer Menge von bis zu 30 Gew.-%, bezogen auf das Gesamtgewicht des Beschichtungsmittels (B1a).

Die Komponenten (a), (b), (c) und (d) sind jeweils voneinander verschieden. Die angegebenen Mengen der Komponenten (a), (b), (c) und (d) beziehen sich jeweils auf das Gesamtgewicht des Beschichtungsmittels (B1a). Die Mengen aller im Beschichtungsmittel (B1a) enthaltenen Komponenten, d.h. die Mengen an in (B1a) enthaltenen Komponenten (a), (b) und (c) sowie optional (d) sowie weiterer optional darin vorhandener Komponenten, addieren sich auf 100 Gew.-%.

Komponente (a) weist wenigstens drei jeweils voneinander verschiedene oder zumindest teilweise identische Struktureinheiten der Formel (I) auf

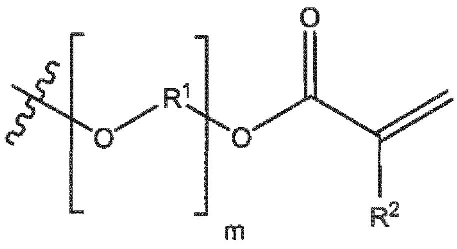

(I),

in denen

die Reste $R^1$ jeweils unabhängig voneinander für eine $C_2$-$C_8$-Alkylengruppe stehen,
die Reste $R^2$ jeweils unabhängig voneinander für H oder Methyl stehen und
die Parameter m jeweils unabhängig voneinander für einen ganzzahligen Parameter in einem Bereich von 1 bis 15, vorzugsweise in einem Bereich von 1 bis 10, besonders bevorzugt in einem Bereich von 1 bis 8 oder 2 bis 8, ganz besonders bevorzugt in einem Bereich von 1 bis 6 oder 2 bis 6, insbesondere in einem Bereich von 1 bis 4 oder 2 bis 4, stehen, jedoch mit der Maßgabe, dass in wenigstens einer der Struktureinheiten der Formel (I) der Parameter m mindestens 2, vorzugsweise mindestens 3 beträgt.

Vorzugsweise weist Komponente (a) wenigstens drei identische Struktureinheiten der Formel (I) auf.

Das Symbol

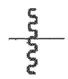

" steht dabei für eine Bindung des jeweiligen Restes an die übergeordnete Struktur der Komponente (a), d.h. beispielsweise für eine Bindung des Restes $-[O-R^1]_m-O-C(=O)-C(R^2)=CH_2$ innerhalb der Struktureinheit der Formel (I) an die übergeordnete Struktur der Komponente (a). Die Bindung erfolgt dabei vorzugsweise über eine Verknüpfung des Sauerstoffatoms des Restes $-[O-R^1]_m-$ an ein Kohlenstoffatom des übergeordneten Restes. Analoges gilt für die weiteren Struktureinheiten der Formel (I). Es ist eindeutig, dass alle wenigstens drei Struktureinheiten der Formel (I) innerhalb einer einzigen Komponente - nämlich der Komponente (a) - vereinigt sind.

Vorzugsweise weist die Komponente (a) genau drei Struktureinheiten der Formel (I) auf. In diesem Fall weist Komponente (a) genau drei funktionelle (Meth)acrylGruppen auf. Alternativ können die Struktureinheiten der Formeln (I) jeweils auch mehr als dreimal als Teil der Komponente (a) vorliegen. In diesem Fall kann Komponente (a) beispielsweise mehr als drei funktionelle (Meth)acryl-Gruppen aufweisen, beispielsweise 4, 5 oder 6 (Meth)acryl-Gruppen.

Die vorstehend genannten Reste $R^1$ stehen jeweils unabhängig voneinander für eine $C_2$-$C_8$-Alkylengruppe, vorzugsweise für eine $C_2$-$C_6$-Alkylengruppe, besonders bevorzugt für eine $C_2$-$C_4$-Alkylengruppe, ganz besonders bevorzugt jeweils unabhängig voneinander für eine Ethylengruppe und/oder eine Propylengruppe, ganz besonders bevorzugt für Ethylen. Insbesondere stehen alle Reste $R^1$ für Ethylen. Als Propylengruppen kommen jeweils Reste $R^1$ in Frage, die eine Struktur $-CH_2-CH_2-CH_2-$ oder eine Struktur $-CH(CH_3)-CH_2-$ oder eine Struktur $-CH_2-CH(CH_3)$-aufweisen. Besonders bevorzugt ist aber jeweils die Propylenstruktur $-CH_2-CH_2-CH_2-$.

Die Parameter m stehen jeweils unabhängig voneinander für eine ganze Zahl in einem Bereich von 1 bis 15. Da die Komponente (a) wenigstens drei der Struktureinheiten der Formeln (I) aufweist und in wenigstens einer der Struktureinheiten der Formel (I) der Parameter m mindestens 2 beträgt, enthält Komponente (a) insgesamt wenigstens vier Ethergruppen der allgemeinen Formel "$-O-R^1-$".

Vorzugsweise weist die Komponente (a) insgesamt wenigstens fünf, besonders bevorzugt wenigstens sechs, Ethergruppen der allgemeinen Formel "$-O-R^1-$" auf. Vorzugsweise liegt die Anzahl der Ethergruppen der allgemeinen Formel "$-O-R^1-$" innerhalb der Komponente (a) in einem Bereich von 4 bis 18, besonderes bevorzugt in einem Bereich von 5 bis 15, ganz besonderes bevorzugt in einem Bereich von 6 bis 12.

Vorzugsweise beträgt der Anteil der in den Struktureinheiten der Formel (I) der Komponente (a) enthaltenen

Ethersegmente -[O-$R^1$]$_m$ insgesamt wenigstens 35 Gew.-%, besonders bevorzugt wenigstens 38 Gew.-%, ganz besonders bevorzugt wenigstens 40 Gew.-%, noch bevorzugter wenigstens 42 Gew.-%, insbesondere wenigstens 45 Gew.-% jeweils bezogen auf das Gesamtgewicht der Komponente (a).

Vorzugsweise weist die Komponente (a) ein Molekulargewicht ($M_n$) im Bereich von 300 bis 2000 g/mol, besonders bevorzugt von 350 bis 1500 g/mol, insbesondere von 400 bis 1000 g/mol auf.

Besonders bevorzugt wird als Komponente (a) wenigstens eine Verbindung der allgemeinen Formel (IVa) und/oder (IVb) eingesetzt,

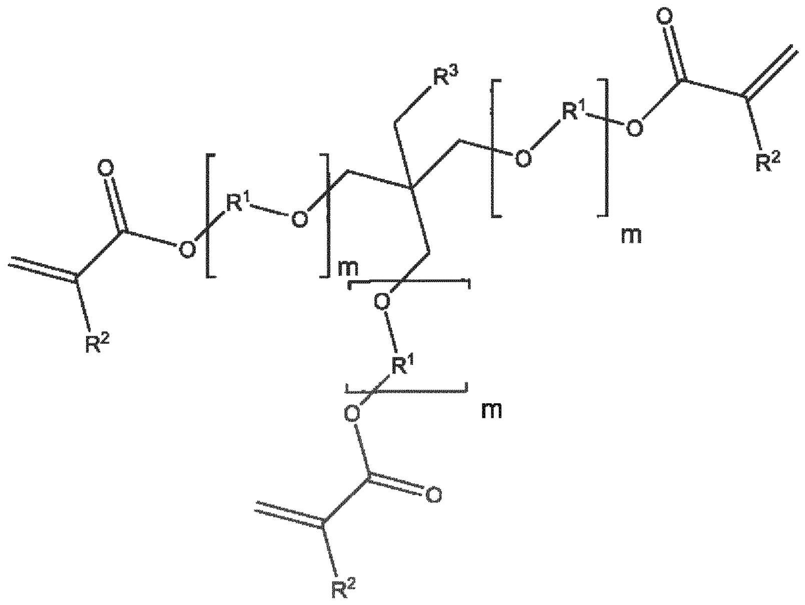

(IVa),

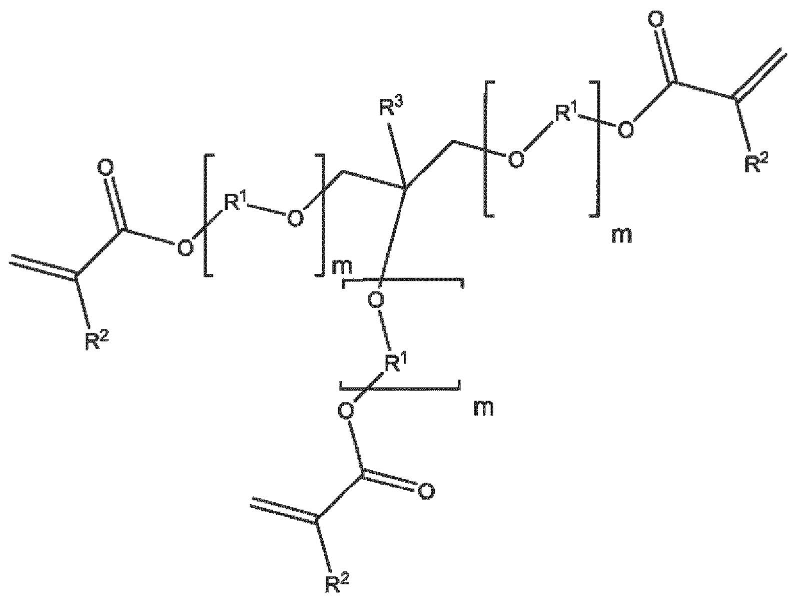

(IVb),

in denen jeweils unabhängig voneinander

$R^1$ und $R^2$ sowie m die vorstehend im Zusammenhang mit den Struktureinheiten (I) genannten Bedeutungen

einschließlich der vorstehend genannten bevorzugten Ausführungsformen davon haben und
$R^3$ für H, $C_1$-$C_8$-Alkyl, OH oder O-$C_{1-8}$-Alkyl steht, besonders bevorzugt für $C_1$-$C_4$-Alkyl, OH oder O-$C_{1-4}$-Alkyl steht, ganz besonders bevorzugt für $C_1$-$C_4$-Alkyl oder OH steht oder
$R^3$ für den Rest -[O-$R^1$]$_m$-O-C(=O)-C($R^2$)=$CH_2$ steht, worin $R^1$, $R^2$ und m die vorstehend im Zusammenhang mit der Struktureinheit (I) genannten Bedeutungen einschließlich der vorstehend genannten bevorzugten Ausführungsformen davon haben.
Ganz besonders bevorzugt wird als Komponente (a) wenigstens eine Verbindung der allgemeinen Formel (IVa) eingesetzt, in der

die Reste $R^1$ jeweils unabhängig voneinander für eine $C_2$-$C_8$-Alkylengruppe stehen,

die Reste $R^2$ jeweils unabhängig voneinander für H oder Methyl stehen, die Parameter m jeweils unabhängig voneinander für einen ganzzahligen Parameter in einem Bereich von 1 bis 15 stehen, vorzugsweise in einem Bereich von 1 bis 10, besonders bevorzugt in einem Bereich von 1 bis 8 oder 2 bis 8, ganz besonders bevorzugt in einem Bereich von 1 bis 6 oder 2 bis 6, insbesondere in einem Bereich von 1 bis 4 oder 2 bis 4, jedoch mit der Maßgabe, dass in wenigstens einer, vorzugsweise in allen, der Struktureinheiten der Formel (I) der Parameter m mindestens 2 beträgt.

$R^3$ für $C_1$-$C_8$-Alkyl, OH oder O-$C_{1-8}$-Alkyl steht, besonders bevorzugt für $C_1$-$C_4$-Alkyl, OH oder O-$C_{1-4}$-Alkyl steht, ganz besonders bevorzugt für $C_1$-$C_4$-Alkyl oder OH steht.

Insbesondere bevorzugt werden als Komponente (a) (Meth)acrylate von insgesamt 4fach bis 20fach, oder von 4fach bis 12fach alkoxyliertem wie ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythritol eingesetzt. Am meisten bevorzugt sind entsprechende (Meth)acrylate, die sich von entsprechend alkoxyliertem Trimethylolpropan ableiten. Solche Produkte sind kommerziell erhältlich und werden beispielsweise unter den Bezeichnungen Sartomer® SR 499 und Sartomer® SR 502 sowie Sartomer® SR 415 und Sartomer® SR 9035 sowie Sartomer® SR 501 vertrieben. Der Begriff "(Meth)acryl" bzw, "(Meth)acrylat" umfasst im Sinne der vorliegenden Erfindung sowohl Methacryl als auch Acryl bzw. sowohl Methacrylat als auch Acrylat.
Vorzugsweise enthält das Beschichtungsmittel (B1a) - abgesehen von der optionalen Komponente (d) - keine Komponente, die nur genau eine oder nur genau zwei ethylenisch ungesättigte Gruppen wie (Meth)acryl-Gruppen aufweist. Für den Fall, dass (B1a) keine Komponente (d) aufweist, enthält (B1a) somit vorzugsweise keine Komponente, die nur genau eine oder nur genau zwei ethylenisch ungesättigte Gruppen wie (Meth)acryl-Gruppen aufweist.
Komponente (b) ist ein Additiv. Der Begriff des Additivs ist dem Fachmann bekannt, beispielsweise aus dem Römpp Lexikon, "Lacke und Druckfarben", Thieme Verlag, 1998, Seite 13. Vorzugsweise wird als Komponente (b) wenigstens ein Rheologieadditiv eingesetzt. Auch dieser Begriff ist dem Fachmann bekannt, beispielsweise aus dem Römpp Lexikon, "Lacke und Druckfarben", Thieme Verlag, 1998, Seite 497. Die Begriffe "Rheologieadditiv", "rheologisches Additiv" und "Rheologiehilfsmittel" sind dabei austauschbar. Vorzugsweise ist das als Komponente (b) eingesetzte Additiv ausgewählt aus der Gruppe bestehend aus Verlaufmitteln, oberflächenaktiven Agentien wie Tensiden, Netz- und Dispergiermitteln, sowie Verdickungsmitteln, Thixotropiermitteln, Weichmachern und Gleit- und Antiblocking-Additiven sowie Mischungen davon. Diese Begriffe sind dem Fachmann ebenfalls bekannt, z.B. aus dem Römpp Lexikon, "Lacke und Druckfarben", Thieme Verlag, 1998. Als Verlaufmittel werden Komponenten bezeichnet, die durch Erniedrigung der Viskosität und/oder Oberflächenspannungen Beschichtungsmitteln zu eben verlaufenden Filmen verhelfen. Als Netz- und Dispergiermitteln werden Komponenten bezeichnet, die die Oberflächenspannung oder allgemein die Grenzflächenspannung herabsetzen. Als Gleit- und Antiblocking-Additive werden Komponenten bezeichnet, die das Verkleben (Blocken) reduzieren.
Beispiele für kommerziell erhältliche Additive sind die Produkte Efka® SL 3259, Byk® 377, Tego® Rad 2500, Tego® Rad 2800,Byk® 394, Byk-SILCLEAN 3710, Silixan® A250, Novec FC 4430 und Novec FC 4432.
Vorzugsweise wird als Additiv (b) wenigstens ein Poly(meth)acrylat und/oder wenigstens ein Siloxan wie wenigstens eine Oligosiloxan und/oder Polysiloxan und/oder wenigstens ein Fluor-haltiges Polymer wie ein Fluor-haltiger vorzugsweise aliphatischer Polyester eingesetzt. Besonders bevorzugt sind Siloxane als Komponente (b). Ganz besonders bevorzugt werden Silikon(meth)acrylate eingesetzt.
Zur Härtung mit Hilfe von (N)IR- und/oder UV-Licht enthält das Beschichtungsmittel (B1a) wenigstens einen Photoinitiator als Komponente (c). Dieser kann durch Licht der eingestrahlten Wellenlänge zu Radikalen zersetzt werden, die ihrerseits eine radikalische Polymerisation starten können. Bei Härtung mit Elektronenstrahlung ist die Anwesenheit solcher Photoinitiatoren dagegen nicht erforderlich. Vorzugsweise enthält das Beschichtungsmittel (B1a) wenigstens einen Photoinitiator als Komponente (c), der durch Licht der eingestrahlten Wellenlänge zu Radikalen zersetzt werden kann, die ihrerseits eine radikalische Polymerisation starten können.

Photoinitiatoren wie UV-Photoinitiatoren sind dem Fachmann bekannt. In Betracht kommen beispielsweise Phosphinoxide, Benzophenone, α-Hydroxy-alkyl-aryl-ketone, Thioxanthone, Anthrachinone, Ace-tophenone, Benzoine und Benzoinether, Ketale, Imidazole oder Phenylglyoxylsäuren und Gemische davon.

Phosphinoxide sind beispielsweise Mono- oder Bisacylphosphinoxide, beispielsweise 2,4,6-Trimethylbenzoyldiphenyl-phosphinoxid, Ethyl-2,4,6-trimethylbenzoylphenylphosphinat oder Bis(2,6-dimethoxy-benzoyl)-2,4,4-trimethylpentylphosphinoxid. Benzophenone sind beispielsweise Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon, α-Hydroxy-alkyl-aryl-ketone sind beispielsweise 1-Benzoylcyclohexan-1-ol (1-Hydroxycyclohexylphenylketon), 2-Hydroxy-2,2-dimethylacetophenon, (2-Hydroxy-2-methyl-1-phenyl-propan-1-on), 1-Hydroxyaceto-phenon, 1-[4-(2-Hydroxyethoxy)-phenyl]-2-hydroxy-2-methyl-1-propan-1-on oder Polymeres, das 2-Hydroxy-2-methyl-1-(4-isopropen-2-yl-phenyl)-propan-1-on einpolymerisiert enthält. Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Diisopropylthioxanthon, 2,4-Dichlorthioxanthon oder Chloroxanthenon, Anthrachinone sind beispielsweise β-Methylanthrachinon, tert-Butylanthrachinon, Anthrachinoncarbonsäureester, Benz[de]-anthracen-7-oη, Benz[a]anthracen-7,12-dion, 2-Methylanthrachinon, 2-Ethylanthrachinon, 2-tert-Butylanthrachinon, 1-Chloranthrachinon oder 2-Amylanthrachinon. Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyaceto-phenon, α-Tetralon, 9-Acetylphenanthren, 2-Acetylphenanthren, 3-Acetylphenan-thren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Di-ethoxy-2-phenylacetophenon, 1,1-Dichloracetophenon, 1-Hydroxyacetophenon, 2,2-Diethoxyacetophenon, 2-Methyl-1-[4-(methylthio)phenyl] -2-morpholinopropan-1-on, 2,2-Dimethoxy-1,2-diphenylethan-2-on oder 2-Benzyl-2-dimethylamino-1-(4-morpho-linophenyl)-butan-1-on. Benzoine und Benzoinether sind beispielsweise 4-Morpholino-deoxybenzoin, Benzoin, Benzoinisobutylether, Benzointetrahydropyranylether, Benzoinmethylether, Benzoinethylether, Benzoinbutylether, Benzoinisopropylether oder 7-H-Benzoinmethylether. Ketale sind beispielsweise Acetophenondimethylketal, 2,2-Diethoxyacetophenon, oder Benzilketale, wie Benzildimethylketal. Weiterhin verwendbare Photoinitiatoren sind beispielsweise Benzaldehyd, Methylethylketon, 1-Naphthaldehyd, Triphenylphosphin, Tri-o-Tolylphosphin oder 2,3-Butandion. Typische Gemische umfassen beispielsweise 2-Hydroxy-2-methyl-1-phenyl-propan-2-oη und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenyl-phosphinoxid.

Bevorzugt unter diesen Photoinitiatoren sind 2,4,6-Trimethylbenzoyldiphenylphosphinoxid, Ethyl-2,4,6-trimethylbenzoyl-phenylphosphinat, Bis-(2,4,6-trimethylbenzoyl)-phenylphosphin-oxid, Benzophenon, 1-Benzoylcyciohexan-1-ol, 2-Hydroxy-2,2-dimethylacetophenon und 2,2-Dimethoxy-2-phenylacetophenon. Vorzugsweise wird daher wenigstens ein solcher Photoinitiator als Komponente (c) eingesetzt. Komponente (c) ist verschieden von den Komponenten (a), (b) und (d). Kommerziell erhältliche Photoinitiatoren sind beispielsweise die Produkte Irgacure® 184, Irgacure® 500, Irgacure® TPO, Irgacure® TPO-L und Lucirin® TPO sowie Darocure® 1173 der BASF SE.

Wie vorstehend erwähnt ist der Einsatz der wenigstens einen Komponente (d) nur optional. Komponente (d) weist mindestens eine vorzugsweise endständige Kohlenstoffdoppelbindung auf. Vorzugsweise handelt es sich dabei um eine (Meth)acryl-Gruppe. Komponente (d) weist vorzugsweise ein oder zwei ethylenisch ungesättigte Gruppen auf wie beispielsweise ein oder zwei oder drei oder auch mehr (Meth)acryl-Gruppen. Es können auch zwei oder mehr unterschiedliche Komponenten (d) eingesetzt werden.

Beispiele für Komponente (d) sind mono-, di-, und/oder tri-funktionelle (Meth)acrylsäureester wie Ethylenglykoldi(meth)acrylat, 1,2-Propandioldi(meth)-acrylat, 1,3-Propandioldi(meth)acrylat, 1,4-Butandioldi(meth)acrylat, 1,3-Butandioldi(meth)acrylat, 1,5-Pentandioldi(meth)acrylat, 1,6-Hexandioldi(meth)-acrylat, 1,8-Octandioldi(meth)acrylat, Neopentylglykoldi(meth)acrylat, 1,1-, 1,2-, 1,3- und 1,4-Cyclohexandimethanoldi(meth)acrylat, 1,2-, 1,3- oder 1,4-Cyclohexandioldi(meth)acrylat,Tricyclodecandimethanoldi(meth)acrylat, Trimethylolpropantri(meth)acrylat, Ditrimethylolpropanpenta- oder -hexa(meth)acrylat, Pentaerythrittri- oder -tetra(meth)acrylat, Glycerindi- oder -tri(meth)acrylat, sowie Di- und Poly(meth)acrylate von Zuckeralkoholen, wie beispielsweise von Sorbit, Mannit, Diglycerol, Threit, Erythrit, Adonit (Ribit), Arabit (Lyxit), Xylit, Dulcit (Galactit), Maltit oder Isomalt, 2-Phenoxyethyl(meth)acrylat, Ethyldiglykol(meth)acrylat, 4-tert.-Butylcyclo-hexyl(meth)acrylat, Trimethylolpropanformalmono(meth)acrylat, Isobornyl(meth)acrylat, Tetrahydro-furfury(meth)acrylat, 2-(2-Ethoxyethoxy)ethyt(meth)acrylat, sowie Lauryl-, Stearyl-, Isodecyl-, Octyl- und Decyl(meth)acrylat, Ester von α,β-ethylenisch ungesättigten Carbonsäuren, bevorzugt von (Meth)acrylsäure mit Alkoholen, die 1 bis 20 C-Atome aufweisen, bevorzugt gegebenenfalls hydroxysubstituierte 1 bis 20 C-Atome aufweisende Alkanole, z.B. (Meth)acrylsäuremethylester, (Meth)acrylsäureethylester, (Meth)-acrylsäure-n-butylester,

(Meth)acrylsäure-2-ethylhexylester, 2-Hydroxyethyl(meth)-acrylat, 2-Hydroxypropyl(meth)acrylat oder 4-Hydroxybutyl(meth)acrylat.

Ganz besonders bevorzugte Komponenten (d) sind 1,4-Butandioldi(meth)acrylat und 1,6-Hexandioldi(meth)acrylat sowie Tricyclodecandimethanoldi(meth)acrylat.

Als Komponente (d) kann zusätzlich oder alternativ zudem wenigstens ein Polyester-, Polyether-, Carbonat-, Epoxid-, Poly(meth)acrylat- und/oder Urethan-(Meth)acrylat, und/oder ungesättigtes Polyesterharz eingesetzt werden. Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan-(meth)acrylate enthalten zusätzlich noch ionische und/oder nichtionische hydrophile Gruppen, welche z.B. durch Aufbaukomponenten wie Hydroxycarbonsäuren ins Urethan eingebracht werden. Derartige Urethan(meth)acrylate enthalten als Aufbaukomponenten im Wesentlichen:

(a) mindestens ein organisches aliphatisches, aromatisches oder cycloaliphatisches Di- oder Polyisocyanat, beispielsweise mindestens eines der oben bei der Zweikomponenten Beschichtungsmassen beschriebenen Polyisocyanaten,
(b) mindestens eine Verbindung mit mindestens einer gegenüber Isocyanat reaktiven Gruppe, bevorzugt einem der oben bei den Polyacrylatpolyolen beschriebenen hydroxygruppentragenden Monomere, und mindestens einer radikalisch polymerisierbaren ungesättigten Gruppe und
(c) gegebenenfalls mindestens eine Verbindung mit mindestens zwei gegenüber Isocyanat reaktiven Gruppen, beispielsweise einem der oben bei den Polyesterolen beschriebenen mehrwertigen Alkoholen.

Die Urethan(meth)acrylate haben vorzugsweise ein zahlenmittleres Molgewicht $M_n$ von 200 bis 20.000, insbesondere von 500 bis 10.000 besonders bevorzugt 600 bis 3.000 g/mol (bestimmt durch Gelpermeationschromatographie mit Tetrahydrofuran und Polystyrol als Standard). Die Urethan(meth)acrylate haben vorzugsweise einen Gehalt von 1 bis 5, besonders bevorzugt von 2 bis 4 Mol (Meth)acrylgruppen pro 1.000 g Urethan(meth)acrylat.

Epoxid(meth)acrylate sind erhältlich durch Umsetzung von Epoxiden mit (Meth)acrylsäure. Als Epoxide in Betracht kommen z.B. epoxidierte Olefine, aromatische Glycidylether oder aliphatische Glycidylether, bevorzugt solche von aromatischen oder aliphatischen Glycidylethern. Epoxidierte Olefine können beispielsweise sein Ethylenoxid, Propylenoxid, iso-Butylenoxid, 1-Butenoxid, 2-Butenoxid, Vinyloxiran, Styroloxid oder Epichlor-hydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin. Aromatische Glycidylether sind z.B. Bisphenol-A-diglycidylether, Bisphenol-F-di-glycidylether, Bisphenol-B-diglycidylether, Bisphenol-S-diglycidylether, Hydrochinon-diglycidylether, Alkylierungsprodukte von Phenol/Dicyclopentadien, z.B. 2,5-bis[(2,3-Epoxypropoxy)phenyl]octahydro-4,7-methano-5H-inden), Tris[4-(2,3-epoxypropoxy)phenyl]methan Isomere), Phenol basierte Epoxy Novolake und Kresol basierte Epoxy Novolake. Aliphatische Glycidylether sind beispielsweise 1,4-Butandioldiglycidether, 1,6-Hexandioldiglycidylether, Trimethylolpropantriglycidylether, Pentaerythrittetra-glycidylether, 1,1,2,2-tetrakis[4-(2,3-epoxypropoxy)phenyl]ethan, Diglycidylether von Polypropylenglykol ($\alpha,\omega$-bis(2,3-epoxypropoxy)poly-(oxypropylen) (und von hydriertem Bisphenol A (2,2-bis[4-(2,3-epoxypropoxy)cyclohexyl]propan). Die Epoxid(meth)acrylate haben vorzugsweise ein zahlenmittleres Molgewicht $M_n$ von 200 bis 20.000, besonders bevorzugt von 200 bis 10.000 g/mol und ganz besonders bevorzugt von 250 bis 3.000 g/mol; der Gehalt an (Meth)acrylgruppen beträgt vorzugsweise 1 bis 5, besonders bevorzugt 2 bis 4 pro 1.000 g Epoxid-(meth)acrylat (bestimmt durch Gelpermeationschromatographie mit Polystyrol als Standard und Tetrahydrofuran als Elutionsmittel).

(Meth)acrylierte Poyl(meth)acrylate sind die entsprechenden Ester von a,ßethylenisch ungesättigten Carbonsäuren, bevorzugt von (Meth)acrylsäure, besonders bevorzugt von Acrylsäure mit Polyacrylatpolyolen, erhältlich durch Veresterung von Poly(meth)acrylatpolyolen mit (Meth)acrylsäure. Bei den Polyacrylatpolyolen kann es sich beispielsweise um solche handeln, wie sie oben bei den Zweikomponenten Beschichtungsmassen beschrieben worden sind.

Carbonat(meth)acrylate sind mit verschiedenen Funktionalitäten erhältlich. Das zahlenmittlere Molekulargewicht $M_n$ der Carbonat(meth)acrylate ist vorzugsweise kleiner 3.000 g/mol, besonders bevorzugt kleiner 1.500 g/mol, besonders bevorzugt kleiner 800 g/mol (bestimmt durch Gelpermeations-chromatographie mit Polystyrol als Standard, Lösemittel Tetrahydrofuran).Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP 0 092 269 A1 beschrieben ist. Erhältlich sind sie auch durch Umsetzung von Phosgen, Harnstoffderivaten mit mehrwertigen, z.B. zweiwertigen Alkoholen. Denkbar sind auch (Meth)acrylate von Polycarbonatpolyolen, wie das Reaktions-produkt aus einem der genannten Di- oder Polyole und einem Kohlensäureester sowie einem hydroxylgruppenhaltigen (Meth)acrylat. Geeignete Kohlensäureester sind z.B. Ethylen-, 1,2- oder 1,3-Propylencarbonat, Kohlensäuredimethyl-, -diethyl- oder -dibutylester. Geeignete hydroxygruppenhaltige (Meth)acrylate sind beispielsweise 2-Hydroxyethyl(meth)acrylat, 2- oder 3-Hydroxypropyl(meth)acrylat, 1,4-Butandiol-mono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat. Vorzugsweise handelt es sich bei den Carbonat(meth)acrylaten um aliphatische Carbonat(meth)acrylate.

Ungesättigte Polyesterharze sind vorzugsweise aufgebaut aus den Komponenten:

(a1) Maleinsäure oder deren Derivate,
(a2) mindestens eine cyclische Dicarbonsäure oder deren Derivate,
(a3) mindestens ein aliphatisches oder cycloaliphatisches Diol.

Unter Derivaten werden im Rahmen dabei bevorzugt verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen $C_1$-$C_4$Alkyl-komponenten, besonders bevorzugt gemischte Methylethylester.

Enthält (B1a) eine Komponente (d), so ist diese vorzugsweise wenigstens ein Urethan(meth)acrylat.

Das Beschichtungsmittel (B1a) kann wenigstens eine weitere von den Komponenten (a) bis (d) verschiedene Komponente (e) enthalten wie beispielsweise Füllstoffe, Pigmente, thermisch aktivierbare Initiatoren wie z.B. Kaliumperoxodisulfat, Dibenzoylperoxid, Cyclohexanonperoxid, Azobis-iso-butyronitril, Cyclohexylsulfonylacetylperoxid, Diisopropylpercarbonat, tert-Butylperoktoat oder Benzpinakol, Di-tert.-Butylperoxid, Cumolhydroperoxid, Dicumylperoxid, tert.-Butylperbenzoat, silylierte Pinakole, hydroxylgruppenhaltige Amin-N-Oxide, wie 2,2,6,6-Tetramethylpiperidin-N-oxyl und 4-Hydroxy-2,2,6,6-Tetramethylpiperidin-N-oxyl, und organische Lösemittel sowie Stabilisatoren. Vorzugsweise sind in (B1a) jedoch keine organischen Lösemittel enthalten. Komponente (e) kann in einer Menge in einem Bereich von 0 bis 15 Gew.-%, vorzugsweise in einem Bereich von 0 bis 12 Gew.-%, besonders bevorzugt in einem Bereich von 0 bis 10 Gew.-% in (B1a) enthalten sein, jeweils bezogen auf das Gesamtgewicht des Beschichtungsmittels (B1a).

Vorzugsweise ist der Festkörpergehalt des Beschichtungsmittels (B1a) $\geq$80 Gew.-%, besonders bevorzugt $\geq$90 Gew.-%, ganz besonders bevorzugt $\geq$95 Gew.-%, insbesondere $\geq$98 oder $\geq$99 Gew.-%, am meisten bevorzugt 100 Gew.-%, jeweils bezogen auf das Gesamtgewicht des Beschichtungsmittels (B1a). Der Festkörpergehalt wird dabei mittels der nachstehend beschriebenen Methode ermittelt.

Vorzugsweise enthält das Beschichtungsmittel (B1a) keine Thiole, insbesondere kein Trimethylolpropantris(3-mercaptopropionat).

Vorzugsweise beträgt der Doppelbindungsumsatz der aus (B1a) erhaltenen zumindest teilweise ausgehärteten Beschichtung (B1) wenigstens 70%, besonders bevorzugt wenigstens 75%, noch bevorzugter wenigstens 80%, ganz besonders bevorzugt wenigstens 85%, insbesondere wenigstens 90%.

*Beschichtungsmittel (B2a)*

Jede Art von Beschichtungsmittel kann als Beschichtungsmittel (B2a) in Schritt (1) des erfindungsgemäßen Verfahrens eingesetzt werden. Bei dem Beschichtungsmittel (B2a) kann es sich um ein physikalisch trocknendes, thermisch härtbares, chemisch härtbares und/oder strahlenhärtbares Beschichtungsmittel (B2a) handeln. Vorzugsweise ist das Beschichtungsmittel (B2a) ein chemisch härtbares, ein thermisch härtbares und/oder strahlenhärtbares Beschichtungsmittel, besonders bevorzugt ein strahlenhärtbares Beschichtungsmittel. Demzufolge erfolgt die zumindest teilweise Aushärtung gemäß Schritt (3) vorzugsweise mittels Strahlenhärtung. Das Beschichtungsmittel (B2a) kann identisch zum Beschichtungsmittel (B1a) sein. Vorzugsweise ist (B2a) jedoch verschieden von (B1a). (B2a) ist vorzugsweise aus den gleichen, aber nicht denselben, Komponenten (a) bis (e) aufgebaut, die auch zur Herstellung von (B1a) eingesetzt werden, wobei die Mengenvorgaben betreffend (B1a) jedoch nicht für (B2a) zutreffen müssen.

Unter einer physikalischen Trocknung wird dabei vorzugsweise das einfache Abdunsten von Lösungsmittel(n) unter Ausbildung der Beschichtung (B2) verstanden. Eine thermische Härtung sieht dabei vorzugsweise einen Härtungsmechanismus vor, der auf eine Temperatur oberhalb von Raumtemperatur (>23°C) zurückzuführen ist. Dies kann beispielsweise die Bildung von Radikalen oder Ionen, bevorzugt Radikalen aus einem Initiator sein, der bei den erhöhten Temperaturen zerfällt und so eine radikalische bzw. ionische Polymerisation startet. Beispiele für solche thermisch aktivierbare Initiatoren sind solche, die eine Halbwertszeit bei 80°C von weniger als 100 Stunden aufweisen. Unter einer chemischen Härtung wird vorzugsweise die Reaktion wenigstens zweier unterschiedlicher und zueinander komplementärer reaktiver funktioneller Gruppen verstanden, beispielsweise im Sinne einer Polykondensation wie einer Reaktion einer -OH-Gruppe mit einer -COOH-Gruppe, oder im Sinne einer Polyaddition (Reaktion einer NCO-Gruppe mit einer-OH- oder Amino-Gruppe).

Ist das Beschichtungsmittel (B2a) ein physikalisch trocknendes, thermisch härtbares und/oder chemisch härtbares Beschichtungsmittels, so wird zu seiner Herstellung wenigstens ein übliches und dem Fachmann bekanntes Polymer als Bindemittel eingesetzt. Dieses weist dann vorzugsweise vernetzbare funktionelle Gruppen auf. Jede übliche dem Fachmann bekannte vernetzbare funktionelle Gruppe kommt dabei in Betracht. Insbesondere sind die vernetzbaren funktionellen Gruppen ausgewählt aus der Gruppe bestehend aus Hydroxyl-Gruppen, Amino-Gruppen, Carbonsäure-Gruppen, Isocyanaten, Polyisocyanaten und Epoxiden. Die Polymere sind vorzugsweise exotherm oder endotherm vernetzbar bzw. härtbar, vorzugsweise in einem Temperaturbereich von -20°C bis zu 250°C, oder von 18°C bis 200°C, vernetzbar bzw. härtbar. Als Polymere eignet sich insbesondere wenigstens ein Polymer ausgewählt aus der Gruppe bestehend aus Polyurethanen, Polyethern, Polyestern, Polyamiden, Polyharnstoffen, Polyvinylchloriden, Polystyrolen, Polycarbonaten, Poly(meth)acrylaten, Epoxidharzen, Phenol-Formaldehydharzen, Melamin-Formaldehydharzen. Die Polymere können dabei insbesondere OHfunktionell sein. In diesem Fall können sie unter den allgemeinen Begriff "Polyole" subsumiert werden. Bei solchen Polyolen kann es sich beispielsweise um Polyacrylatpolyole, Polyester-polyole, Polyetherpolyole, Polyurethanpolyole, Polyharnstoffpolyole, Polyesterpolyacrylatpolyole, Polyesterpolyurethanpolyole, Polyurethanpolyacrylatpolyole, polyurethanmodifizierte Alkydharze, Fettsäuremodifizierte Polyesterpolyurethanpolyole sowie Mischungen der genannten Polyole handeln. Bevorzugt sind Polyacrylatpolyole, Polyesterpolyole und Polyetherpolyole.

Es kann dabei wenigstens ein Polymer eingesetzt werden, welches unter Beteiligung von Isocyanat und/oder oligomerisierten Isocyanat-Gruppen ausgehärtet wird, ganz besonders bevorzugt wenigstens ein entsprechendes Polyurethan und/oder wenigstens ein entsprechender Polyharnstoff (z.B. sogenannte "Polyaspartic-Bindemittel"). Bei Polyaspartic-Bindemitteln handelt es sich um Komponenten, die aus Reaktion von aminofunktionellen Verbindungen, insbesondere sekundären Aminen, mit Isocyanaten umgesetzt werden. Wird wenigstens ein Polyurethan eingesetzt, so eignen sich insbesondere Polyurethan-basierte Harze, die durch eine Polyadditionsreaktion zwischen hydroxylgruppenhaltigen Komponenten wie Polyolen und wenigstens einem Polyisocyanat (aromatische und aliphatische Isocyanate, Di-, Tri- und/oder Polyisocyanate) herstellbar sind. Dabei ist üblicherweise ein stöchiometrischer Umsatz der OH-Gruppen der Polyole mit den NCO-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann. Werden Epoxidharze, d.h. Epoxidbasierte Harze eingesetzt, so eignen sich vorzugsweise solche Epoxid-basierten Harze, die aus Glycidylethern hergestellt werden, welche endständige Epoxidgruppen und innerhalb des Moleküls Hydroxylgruppen als funktionelle Gruppen aufweisen. Vorzugsweise sind diese Umsetzungsprodukte von Bisphenol A und Epichlorhydrin bzw. Bisphenol F mit Epichlorhydrin und Mischungen davon, welche auch in Gegenwart von Reaktivverdünnern) eingesetzt werden. Die Härtung bzw. Vernetzung derartiger Epoxid-basierter Harze erfolgt üblicherweise durch eine Polymerisation der Epoxidgruppen des Epoxidringes, durch eine Polyadditionsreaktion in Form einer Anlagerung anderer reaktiver Verbindungen als Härter in stöchiometrischen Mengen an die Epoxidgruppen, wobei dementsprechend pro Epoxidgruppe die Gegenwart eines aktiven Wasserstoffäquivalents erforderlich ist (d.h. pro Epoxid-Äquivalent zur Aushärtung ein H-aktives-Äquivalent benötigt wird), oder durch eine Polykondensation über die Epoxid- und die Hydroxylgruppen. Geeignete Härter sind beispielsweise Polyamine, insbesondere (hetero)aliphatische, (hetero)aromatische und (hetero) cycloaliphatische Polyamine, Polyamidoamine, Polyaminoamide sowie Polycarbonsäuren und ihre Anhydride.

Der Begriff der "Strahlenhärtung" ist bereits vorstehend im Zusammenhang mit dem Beschichtungsmittel (B1a) beschrieben worden. Das Beschichtungsmittel (B2a) kann durch Einsatz einer Strahlenquelle gehärtet werden, vorzugsweise durch Einsatz von UV-Strahlung. Somit ist (B2a) vorzugsweise ein UV-Strahlen-härtendes Beschichtungsmittel.

Vorzugsweise weist (B2a) daher ungesättigte Kohlenstoff-Doppelbindungen auf, besonders bevorzugt (Meth)acryl-Gruppen. Zu diesem Zweck kann das Beschichtungsmittel (B2) jede der vorstehend im Zusammenhang mit (B1a) genannten und unter die Komponenten (a) und (d) von (B1a) subsumierbaren Komponenten enthalten, wie insbesondere Polyester-, Polyether-, Carbonat-, Epoxid-, Poly(meth)acrylat- und/oder Urethan-(Meth)acrylate und/oder wenigstens ein ungesättigtes Polyesterharz und/oder mono-, di-, und/oder tri-funktionelle (Meth)acrylsäureester.

Bei Härtung mit Hilfe von (N)IR- und/oder UV-Licht enthält das Beschichtungsmittel (B2a) vorzugsweise wenigstens einen Photoinitiator, der durch Licht der eingestrahlten Wellenlänge zu Radikalen zersetzt werden kann, die ihrerseits eine radikalische Polymerisation starten können. Bei Härtung mit Elektronenstrahlung ist die Anwesenheit solcher Photoinitiatoren dagegen nicht erforderlich. Als Photoinitiatoren können die gleichen Komponenten in den gleichen Mengen eingesetzt werden, die vorstehend im Zusammenhang mit Komponente (c) des Beschichtungsmittels (B1a) genannt worden sind.

Das Beschichtungsmittel (B2a) kann zudem wenigstens ein weiteres Additiv enthalten. Dabei können die gleichen Komponenten in den gleichen Mengen eingesetzt werden, die vorstehend im Zusammenhang mit den Komponenten (b) und (e) des Beschichtungsmittels (B1a) genannt worden sind.

Besonders bevorzugt wird als Beschichtungsmittel (B2a) ein Beschichtungsmittel eingesetzt, welches (Meth)acryl-Gruppen aufweist. Vorzugsweise enthält dieses Beschichtungsmittel (B2a) wenigstens ein Urethan(meth)acrylat. Vorzugsweise enthält es zudem wenigstens einen Photoinitiator.

*Erfindungsgemäßer Verbund (F1B1)*

Ein weiterer Gegenstand der vorliegenden Erfindung ist ein Verbund (F1B1) aus einem Substrat (F1) und einer zumindest teilweise geprägten und zumindest teilweise ausgehärteten Beschichtung (B1), welcher herstellbar ist durch zumindest teilweises Aushärten eines auf wenigstens einen Teil einer Oberfläche des Substrats (F1) applizierten und zumindest teilweise geprägten Beschichtungsmittels (B1a) durch Strahlenhärtung, wobei das Beschichtungsmittel (B1a) ein strahlenhärtbares Beschichtungsmittel ist, welches

wenigstens eine Komponente (a) in einer Menge in einem Bereich von 40 bis 95 Gew.-%,
wenigstens ein Additiv als Komponente (b) in einer Menge in einem Bereich von 0,01 bis 5 Gew.-%,
wenigstens einen Photoinitiator als Komponente (c) in einer Menge in einem Bereich von 0,01 bis 15 Gew.-%, und
wenigstens eine mindestens eine Kohlenstoffdoppelbindung aufweisende Komponente (d) in einer Menge in einem Bereich von 0 bis 45 Gew.-% enthält,
wobei (i) die Komponenten (a), (b), (c) und (d) jeweils voneinander verschieden sind, (ii) sich die angegebenen Mengen der Komponenten (a), (b), (c) und (d) jeweils auf das Gesamtgewicht des Beschichtungsmittels (B1a) beziehen und (iii) sich die Mengen aller im Beschichtungsmittel (B1a) enthaltenen Komponenten auf 100 Gew.-% addieren,
und wobei Komponente (a) wenigstens drei jeweils voneinander verschiedene oder zumindest teilweise identische Struktureinheiten der Formel (I) aufweist

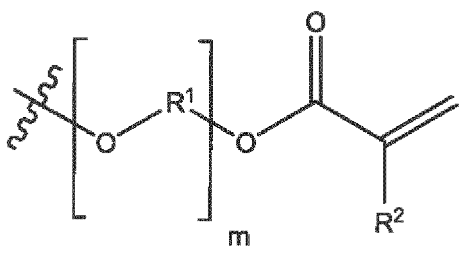

**(I),**

in denen
die Reste $R^1$ jeweils unabhängig voneinander für eine $C_2$-$C_8$-Alkylengruppe stehen,
die Reste $R^2$ jeweils unabhängig voneinander für H oder Methyl stehen und die Parameter m jeweils unabhängig voneinander für einen ganzzahligen Parameter in einem Bereich von 1 bis 15 stehen, jedoch mit der Maßgabe, dass in wenigstens einer der Struktureinheiten der Formel (I) innerhalb der Komponente (a) der Parameter m mindestens 2 beträgt, wobei die Anzahl an Ethergruppen der allgemeinen Formel "-O-$R^1$-" innerhalb der Komponente a) in einem Bereich von 4 bis 18 liegt.

Alle im Zusammenhang mit dem erfindungsgemäßen Verfahren hierin zuvor beschriebene bevorzugte Ausführungsformen, insbesondere im Zusammenhang mit dem darin verwendeten Beschichtungsmittel (B1a) und dem Substrat (F1) sowie der Beschichtung (B1), sind auch bevorzugte Ausführungsformen hinsichtlich des erfindungsgemäßen Verbunds (F1B1).
Vorzugsweise ist der erfindungsgemäße Verbund (F1B1) mittels Durchführung der vorstehend beschriebenen Verfahrensschritte (5) bis (8) des erfindungsgemäßen Verfahrens erhältlich. Vorzugsweise handelt es sich bei dem Substrat (F1) um eine Folienbahn, besonders bevorzugt um eine Endlos-Folienbahn.

*Verwendung*

Ein weiterer Gegenstand der vorliegenden Erfindung ist eine Verwendung des erfindungsgemäßen Verbunds (F1B1) als Prägematrize (p2) eines Prägewerkzeugs (P2) zur Übertragung einer Prägestruktur auf wenigstens einen Teil einer Oberfläche eines Beschichtungsmittels (B2a) oder auf wenigstens einen Teil einer Oberfläche eines Beschichtungsmittels (B2a), welches zumindest teilweise auf einem Substrat (F2) appliziert ist, vorzugsweise eines mit einem Beschichtungsmittel (B2a) beschichteten Substrats (F2), vorzugsweise innerhalb des erfindungsgemäßen Verfahrens.
Alle im Zusammenhang mit dem erfindungsgemäßen Verfahren und dem erfindungsgemäßen Verbund (F1B1) hierin zuvor beschriebene bevorzugte Ausführungsformen sind auch bevorzugte Ausführungsformen hinsichtlich der

vorgenannten Verwendung des erfindungsgemäßen Verbunds (F1B1).

Vorzugsweise ist das Beschichtungsmittel (B2a) dabei ein strahlenhärtbares Beschichtungsmittel.

**Bestimmungsmethoden**

1. Bestimmung des nicht-flüchtigen Anteils

Die Bestimmung des nicht-flüchtigen Anteils (des Festkörpers bzw. Festkörperanteil bzw. Festkörpergehalts) erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil.

2. Bestimmung der Abformgenauigkeit

Die Bestimmung der Abformgenauigkeit erfolgt mittels eines handelsüblichen Rasterkraftmikroskops (AFM) unter Verwendung eines handelsüblichen Cantilevers. Mittels AFM kann so zum Beispiel die Oberflächentopographie von einer bestimmten Gitterstruktur wie die des Prägewerkzeugs P1 mit einer Tiefe von beispielsweise 140 nm und einer Periode von beispielsweise 430 nm mit der Oberflächentopographie einer Masterfolie (B1F1) nach Prägung verglichen werden. Das Prägewerkzeug wird in diesem Fall absichtlich an einer bestimmten Stelle beschädigt, um so einen Bezugspunkt zu definieren. Durch diesen Bezugspunkt können die jeweils gleichen Bereiche der Referenz und der Replikation untersucht und miteinander verglichen werden. Die Abformgenauigkeit definiert dabei, wie genau eine bestimmte Referenzstruktur transferiert werden kann, wie zum Beispiel vom Prägewerkzeug P1 auf eine Masterfolie (B1F1). Wenn beispielsweise der untersuchte Bereich des Prägewerkzeugs P1 eine Gitterstruktur mit einer Tiefe von 140 nm aufweist, wird diese Referenztiefe dann verglichen mit der entsprechenden Höhe der Struktur, die an der Masterfolie (B1F1) bestimmt wird. Die prozentuale Änderung, die dabei der Abformgenauigkeit entspricht, wird dabei definiert als:

$$\Delta h = 100 * (1 - \frac{h_m}{h_r})$$

$\Delta h$ entspricht hier der prozentualen Änderung, $h_m$ der Höhe der Struktur des untersuchten Bereichs der Masterfolie und $h_r$ der entsprechenden Tiefe der Struktur des untersuchten Bereichs des Prägewerkzeugs. Diese prozentuale Änderung, also die Abformgenauigkeit, wird auch als 'Schrumpf' bezeichnet. Je geringer die Werte für $\Delta h$ sind, desto besser ist die Abformgenauigkeit.

3. Bestimmung der Auslaufzeit

Die Bestimmung der Auslaufzeit erfolgt gemäß DIN EN ISO 2431 (Datum: März 2012). Dabei wird die Auslaufzeit mittels eines 4-mm-Auslaufbechers (Nr. 4) bei Raumtemperatur (20°C) bestimmt.

4. Bestimmung des Doppelbindungsumsatzes

Der Doppelbindungsumsatz (DB-Umsatz) wird nach Aushärtung der untersuchten Probe mittels ATR-IR-Spektroskopie bestimmt. Bei der Methode der ATR-IR-Spektroskopie wird an der Kontaktstelle eines runden Reflexionskristalls mit dem Substrat ein IR-Spektrum aufgenommen. Die Kontaktstelle hat einem Durchmesser von ca. 200 µm und als Reflexionskristall wird ein Germaniumkristall eingesetzt.

Als Ausgangsmaterial zur Berechnung des Doppelbindungsumsatzes werden die entsprechenden Nassmuster der Probe verwendet. Berechnet wird der DB-Umsatz über die Intensitätsabnahme der Bande bei 810 $cm^{-1}$. Als Normierungsbande wird eine Esterbande bei 1730 $cm^{-1}$ zugrunde gelegt. Der prozentuale Doppelbindungsumsatz wird berechnet mit folgender Formel:

$$DB - Umsatzes = 100 * (1 - \frac{I_{810cm-1}}{I_{Ref-810cm-1}})$$

Dabei ist $I_{810cm-1}$ die normierte Intensität bei 810$cm^{-1}$ der ausgehärteten Schicht und $I_{Ref-810cm-1}$ die normierte Intensität bei 810 $cm^{-1}$ ist von dem entsprechenden Nassmuster. Ein Doppelbildungsumsatz ≥90% wird als ausreichend eingestuft.

5. Bestimmung der Haftung

Die Bestimmung der Haftung erfolgt gemäß DIN EN ISO 2409 (Datum: Juni 2013) mittels der Gitterschnittprüfung. Dabei wird in einer Doppelbestimmung die Haftung der zu untersuchenden Lackschicht zum Substrat geprüft. Es wird ein Gitterschnittprüfer der Firma Byk Gardner mit 2 mm Schnittabstand manuell eingesetzt. Anschließend wird auf die geschädigte Fläche Tesa-Band Nr. 4651 aufgedrückt und abgezogen zur Entfernung des enthafteten Bereiche. Die Beurteilung erfolgt anhand von Kennwerten im Bereich von 0 (geringe Enthaftung) bis 5 (sehr hohe Enthaftung). Ein durchschnittlicher Wert von mindestens 3,5 wird als ausreichend eingestuft.

6. Bestimmung des Erfolgs der Replikation

Die Bestimmung der Erfolg der Replikation erfolgt visuell, wobei der prozentuale Anteil der erfolgreich replizierten Fläche bestimmt wird. Der Bereich liegt dabei zwischen 0% bis 100% erfolgreich replizierter Flache. Falls nicht 100% der Fläche repliziert ist, bedeutet dies, dass ein entsprechender Anteil der Fläche nicht von der Prägematrize entfernt werden konnten, d.h. dass die Beschichtung B1 in Form von B1F1 teilweise auf dem Prägewerkzeug P1, oder dass die Beschichtung B2 teilweise auf der Masterfolie B1F1 haften geblieben ist.

**Beispiele und Vergleichsbeispiele**

Die nachfolgenden Beispiele und Vergleichsbeispiele dienen der Erläuterung der Erfindung, sind jedoch nicht einschränkend auszulegen.
Sofern nicht anders angeführt, handelt es sich bei den Angaben in Teilen um Gewichtsteile und bei Angaben in Prozenten jeweils um Gewichtsprozente.

1. Eingesetzte Rohstoffe und Materialien

Hostaphan® GN - kommerziell erhältliche PET-Folie mit einer Schichtdicke von 125 μm.
Laromer® UA 9033 (L UA 9033) - aliphatisches Urethanacrylat der Firma BASF SE, einsetzbar als Komponente (d)
Hexandioldiacrylat (HDDA) - einsetzbar als Komponente (d)
Sartomer® 395 (SR 395) - Isodecylacrylat der Firma Sartomer, einsetzbar als Komponente (d)
Sartomer® 502 (SR 502) - 9-fach ethoxyliertes TMPTA (Trimethylpropantriacrylat) der Firma Sartomer, einsetzbar als Komponente (a)
Sartomer® 499 (SR 499) - 6-fach ethoxyliertes TMPTA (Trimethylpropantriacrylat) der Firma Sartomer, einsetzbar als Komponente (a)
Sartomer® 454 (SR 454) - 3-fach ethoxyliertes TMPTA (Trimethylpropantriacrylat) der Firma Sartomer, einsetzbar als Vergleichskomponente (a)
TMPTA (Trimethylpropantriacrylat) - einsetzbar als Vergleichskomponente (a) GPTA (Glyceryl propoxytriacrylat) - 3-fach propoxyliertes Glyceryltriacrylat, einsetzbar als Vergleichskomponente (a)
Irgacure® 184 (I-184) - kommerziell erhältlicher Photoinitiator der Firma BASF SE, einsetzbar als Komponente (c)
Irgacure® TPO-L (I-TPO-L) - kommerziell erhältlicher Photoinitiator der Firma BASF SE, einsetzbar als Komponente (c)
Irgacure® TPO (I-TPO) - kommerziell erhältlicher Photoinitiator der Firma BASF SE, einsetzbar als Komponente (c)
Tego® Rad 2500 (TR 2500) - Gleit- und Antiblocking-Additiv der Firma Evonik (Silikonacrylat), einsetzbar als Komponente (b)
Byk-SILCLEAN 3710 (BS 3710) - Oberflächenadditiv der Firma BYK Chemie GmbH (Polyether modifiziertes Acryl-funktionelles Polydimethylsiloxan), einsetzbar als Komponente (b)

2. Beispiele

**2.1** *Herstellung von Beschichtungsmitteln (B1a) und entsprechenden Vergleichsbeschichtungsmitteln*

Es wurden die Beschichtungsmittel gemäß den nachstehenden Tabellen 1a und 1b hergestellt. Beschichtungsmittel E1a bis E7a sind erfindungsgemäß. Beschichtungsmittel V1a bis V5a sind Vergleichsbeschichtungsmittel. Die ermittelten Auslaufzeiten bei Raumtemperatur (20°C) liegen im Fall der Herstellung von E1a bis E3a und V1a bis V5a im Bereich von 26 bis 172 s.

Tabelle 1a:

| *Beschichtungsmittel* | *Komponente (a) oder Vergleichskomponente* (a) | *Komponente (b)* | *Komponente (d)* | *Komponente (c)* |
|---|---|---|---|---|
| E1a | SR 499 (65 Teile) | TR 2500 (1 Teil) | L UA 9033 (13,5 Teile) und HDDA (13,5 Teile) | I-184 (3,5 Teile) und I-TPO-L (3,5 Teile) |
| E2a | SR 499 (92 Teile) | TR 2500 (1 Teil) | - | I-184 (3,5 Teile) und I-TPO-L (3,5 Teile) |
| E3a | SR 502 (65 Teile) | TR 2500 (1 Teil) | L UA 9033 (13,5 Teile) und HDDA (13,5 Teile) | I-184 (3,5 Teile) und I-TPO (3,5 Teile) |
| V1a | SR 499 (65 Teile) | - | L UA 9033 (13,5 Teile) und HDDA (13,5 Teile) | I-184 (3,5 Teile) und I-TPO-L (3,5 Teile) |
| V2a | SR 454 (65 Teile) | TR 2500 (1 Teil) | L UA 9033 (13,5 Teile) und HDDA (13,5 Teile) | I-184 (3,5 Teile) und I-TPO (3,5 Teile) |
| V3a | TMPTA (50 Teile) | TR 2500 (1 Teil) | L UA 9033 (26 Teile) und SR 395 (16 Teile) | I-184 (3,5 Teile) und I-TPO-L (3,5 Teile) |
| V4a | GPTA (50 Teile) | TR 2500 (1 Teil) | L UA 9033 (26 Teile) und SR 395 (16 Teile) | I-184 (3,5 Teile) und I-TPO-L (3,5 Teile) |
| V5a | SR 499 (32 Teile) | TR 2500 (1 Teil) | L UA 9033 (30 Teile) und HDDA (30 Teile) | I-184 (3,5 Teile) und I-TPO-L (3,5 Teile) |

Tabelle 1b:

| *Beschichtungsmittel* | *Komponente (a) oder Vergleichs-komponente (a)* | *Komponente (b)* | *Komponente (d)* | *Komponente (c)* |
|---|---|---|---|---|
| E4a | SR 499 (63 Teile) | TR 2500 (0,5 Teile) | L UA 9033 (13,5 Teile) und HDDA (13,5 Teile) | I-184 (3,5 Teile) und I-TPO (3,5 Teile) |
| E5a | SR 499 (63 Teile) | TR 2500 (1 Teil) | L UA 9033 (13,5 Teile) und HDDA (13,5 Teile) | I-184 (3,5 Teile) und I-TPO (3,5 Teile) |
| E6a | SR 499 (63 Teile) | TR 2500 (2 Teile) | L UA 9033 (13,5 Teile) und HDDA (13,5 Teile) | I-184 (3,5 Teile) und I-TPO (3,5 Teile) |
| E7a | SR 499 (63 Teile) | BS 3710 (1 Teil) | L UA 9033 (13,5 Teile) und HDDA (13,5 Teile) | I-184 (3,5 Teile) und I-TPO (3,5 Teile) |

**2.2** *Herstellung von Masterfilmen (81F1) unter Einsatz von E1a bis E3a und V1a bis V5a*

Mehrere unterschiedliche Masterfolien werden unter Einsatz einer Rolle-zu-Platte Prägevorrichtung mit einem Prägewerkzeug P1 aus Nickel, welches die gewünschte Positivstruktur trägt, hergestellt. Dazu wird jeweils eines der vorstehend beschriebenen Beschichtungsmittel E1a bis E3a und V1a bis V5a auf P1 appliziert und darüber eine PET-Folie (F1) aufgebracht (Hostaphan® GN). Der so erhaltene Stack aus Folie und jeweiligem Beschichtungsmittel läuft

dann unter einer Anpresswalze hindurch und noch während die Prägevorrichtung in Kontakt mit dem Beschichtungsmittel des jeweiligen Stacks ist, erfolgt die zumindest teilweise Aushärtung der Beschichtungsmittel durch eine UV-LED Lampe. Dabei wird eine 365 nm, 6W UV-LED Lampe von Easytec (100% Lampenleistung, 2 m/min, 2 Durchläufe) eingesetzt. Anschließend wird die zumindest teilweise ausgehärtete Beschichtung samt Folie mit der im Vergleich zu P1 Negativstruktur von der Prägevorrichtung getrennt und die strukturierte Folie (Masterfilm) erhalten. Die Masterfilme werden im Anschluss nachbelichtet mit einem UVA-Strahler (Panacol-Elosal UV F-900).

Ferner wird eine Masterfolie unter Einsatz einer Rolle-zu-Rolle Prägevorrichtung mit einem Prägewerkzeug P1 aus Nickel, welches die gewünschte Positivstruktur trägt, hergestellt. Dazu wird das vorstehend beschriebene Beschichtungsmittel E1a auf eine PET-Folie (F1) aufgebracht (Hostaphan® GN) und mit Hilfe einer Anpresswalze über das Prägewerkzeug P1 geführt. Noch während die Prägevorrichtung in Kontakt mit dem Beschichtungsmittel ist, erfolgt die zumindest teilweise Aushärtung des Beschichtungsmittels durch eine UV-LED Lampe. Dabei wird eine 365 nm, 6W UV-LED Lampe von Easytec (100% Lampenleistung, 5 m/min) eingesetzt. Anschließend wird die zumindest teilweise ausgehärtete Beschichtung samt Folie mit der im Vergleich zu P1 Negativstruktur von der Prägevorrichtung getrennt und die strukturierte Folie (Masterfilm) erhalten. Der Masterfilm wird im Anschluss nachbelichtet mit einem UVA-Strahler (Panacol-Elosal UV F-900).

**2.3** *Herstellung von Masterfilmen (B1F1) unter Einsatz von E4a bis E7a*

Mehrere unterschiedliche Masterfolien werden unter Einsatz eines Prägewerkzeugs P1 aus Nickel, welches die gewünschte Positivstruktur trägt, hergestellt. Dazu wird jeweils eines der vorstehend beschriebenen Beschichtungsmittel E4a bis E7a auf P1 appliziert und darüber eine PET-Folie aufgebracht (Hostaphan® GN). Der so erhaltene Stack aus Folie und jeweiligem Beschichtungsmittel wird dann mit einem Gummiroller angepresst und noch während das Prägewerkzeug in Kontakt mit dem Beschichtungsmittel des jeweiligen Stacks ist, erfolgt die zumindest teilweise Aushärtung der Beschichtungsmittel durch eine UV-LED Lampe. Dabei wird eine 365 nm, 6W UV-LED Lampe von Easytec (100% Lampenleistung, 2 m/min, 2 Durchläufe) eingesetzt. Anschließend wird die zumindest teilweise ausgehärtete Beschichtung samt Folie mit der im Vergleich zu P1 Negativstruktur vom Prägewerkzeug getrennt und die strukturierte Folie (Masterfilm) erhalten.

**2.4** *Hergestellte Masterfilme*

Auf die unter Punkt 2.2 und 2.3 beschriebene Weise werden verschiedene Sets an Masterfilmen (E1F1 bis E7F1 und V1F1 bis V5F1) erhalten, die sich zudem je nach Art der Positivstruktur in ihrer Prägung unterscheiden. Es wurden hierbei Prägevorrichtungen aus Nickel mit verschiedenen Positivstrukturen eingesetzt, nämlich mit

- einer Nanostruktur (Gitterstruktur mit einer Periode von 430 nm und einer Tiefe von 140 nm; das jeweilige Beschichtungsmittel wird in Schichtdicken zwischen 5-10 μm auf die eingesetzte PET-Folie appliziert),
- einer Mikrostruktur A (Zweidimensionale Dreieck-Struktur mit einer Breite und Höhe von 33 μm und 35 μm Raum zwischen den Strukturen; das jeweilige Beschichtungsmittel wird in Schichtdicken zwischen 20 μm auf die eingesetzte PET-Folie appliziert),
- einer Mikrostruktur B (kontinuierliche zweidimensionale Dreieck-Struktur mit einer Breite von 43 μm und einer Höhe von 10 μm; das jeweilige Beschichtungsmittel wird in Schichtdicken von 20 μm auf die eingesetzte PET-Folie appliziert), oder mit
- einer Mikrostruktur C (zweidimensionale Dreieck-Struktur mit einer Höhe von 80 μm und 115 μm Raum zwischen den Strukturen; das jeweilige Beschichtungsmittel wird in Schichtdicken von 110 μm auf die eingesetzte PET-Folie appliziert).

Die Masterfilme mit der Nanostruktur werden hinsichtlich der Bestimmung der Abformgenauigkeit, der Doppelbindungsumsätze und der Haftung eingesetzt. Die Masterfilme mit der Mikrostruktur A werden hinsichtlich der Bestimmung des Erfolgs der Replikation im Fall derjenigen Masterfilme eingesetzt, zu deren Herstellung eines der Beschichtungsmittel E1a bis E3a und V1a bis V5a verwendet worden ist (vgl. nachstehenden Punkt 2.5) und zudem wie nachstehend unter Punkt 2.6 beschrieben als Prägematrize eingesetzt . Die Masterfilme mit der Mikrostruktur B werden hinsichtlich der Bestimmung des Erfolgs der Replikation im Fall derjenigen Masterfilme eingesetzt, zu deren Herstellung eines der Beschichtungsmittel E4a bis E7a verwendet worden ist (vgl. nachstehenden Punkt 2.5) und zudem wie nachstehend unter Punkt 2.6 beschrieben als Prägematrize eingesetzt. Der Masterfilm mit der Mikrostruktur C wird wie nachstehend unter Punkt 2.7 beschrieben als Prägematrize eingesetzt. Zur Herstellung dieses Masterfilms wird das Beschichtungsmittel E1a eingesetzt und entsprechend ein Masterfilm E1F1 mit Mikrostruktur C erhalten.

**2.5** *Untersuchungen an den Masterfilmen*

Nachfolgende Tabelle 2 fasst die erfolgten Untersuchungen zusammen. Die Untersuchungen erfolgten jeweils gemäß den vorstehend beschriebenen Methoden. Das Zeichen "-" bedeutet innerhalb der Tabelle, dass die jeweilige Untersuchung nicht durchgeführt worden ist.

Tab. 2:

| *Masterfilm* | *DB-Umsatz (%)* | *Haftung* | *Erfolg der Replikation (%)* | *Abformgenauigkeit ($\Delta h$, %)* |
|---|---|---|---|---|
| E1F1 | 92 | 3.5 | 100 | 4 |
| E2F1 | 90 | 0.5 | 100 | 4 |
| E3F1 | 95 | 2.5 | - | 4 |
| V1F1 | 93 | 5 | 100 | 3 |
| V2F1 | 85 | 1.5 | 85 | 2 |
| V3F1 | 89 | 5 | 85 | 5 |
| V4F1 | 92 | 5 | 100 | 4 |
| V5F1 | 87 | 5 | 85 | 29 |
| E4F1 | - | - | 100 | - |
| E5F1 | - | - | 100 | <1 |
| E6F1 | - | - | 100 | - |
| E7F1 | - | - | 100 | <1 |

Die Daten zeigen, dass im Fall von V2F1, V3F1 und V5F1 kein ausreichender DB-Umsatz erzielt wird (DB-Umsatz < 90). Bei einem zu geringen DB-Umsatz können Probleme beim Prägen sowohl des Beschichtungsmittels (B1a) als auch später des Beschichtungsmittels (B2a) auftreten. Die Masterfilme E1F1, E2F1 und E3F1 zeigen dagegen DB-Umsätze von mindestens 90%.

Im Fall von V1F1 und V4F1 sind die DB-Umsätze zwar >90%, jedoch wird mittels diesen Masterfilmen genau wie mit V3F1 und V5F1 keine ausreichende Haftung erzielt (Bewertung der Gitterschnittprüfung mit der Note 5). Bei einer zu geringen Haftung des Masterlacks auf der PET-Folie können Probleme beim Prägen sowohl des Beschichtungsmittels (B1a) als auch später des Beschichtungsmittels (B2a) auftreten. Die Masterfilme E1F1, E2F1 und E3F1 zeigen dagegen allesamt gute bis ausreichende Haftungseigenschaften.

Die Daten zeigen zudem, dass im Fall von V2F1, V3F1 und V5F1 nur Werte von 85% bei der Beurteilung des Erfolgs der Replikation erhalten werden, da 15% der jeweiligen Beschichtung V2, V3 bzw. V5 nicht vom Prägewerkzeug entfernt werden konnten. Die untersuchten Masterfilme E1F1 und E2F1 zeigen dagegen einen Replikationserfolg von 100%.

Bis auf V5F1 zeigen alle untersuchten Masterfilme eine ausreichende Abformgenauigkeit, da durchweg sehr geringe Werte des Schrumpfs erhalten werden. Nur im Fall von V5F1 wird ein Schrumpf von 29% erhalten, was inakzeptabel ist.

Zusammenfassend ist festzustellen, dass nur die Masterfilme E1F1, E2F1 und E3F1 gute Ergebnisse in Bezug auf alle untersuchten Eigenschaften liefern (DB-Umsatz, Haftung, Abformgenauigkeit und Erfolg der Replikation).

**2.6** *Einsatz der Masterfilme als Prägematrize zur Herstellung von geprägten Produktfilmen*

Die jeweils erhaltenen Masterfilme mit der Mikrostruktur A oder B werden dann jeweils als Prägematrize eines Prägewerkzeugs eingesetzt. Hierzu wird der Masterfilm in einer Rolle-zu-Platte Prägevorrichtung eingesetzt. Ein Beschichtungsmittel (B2a) wird mit einer Nassschichtdicke von 20 $\mu$m auf den jeweiligen Masterfilm aufgebracht. Zudem wird eine PET-Folie als Substrat F2 (Hostaphan® GN) mit den Beschichtungsmittel (B2a) in Kontakt gebracht. Der so erhaltene Stack aus Folie und Beschichtungsmittel (B2a) läuft dann unter einer Anpresswalze hindurch und noch während die Prägevorrichtung in Kontakt mit dem Beschichtungsmittel des jeweiligen Stacks ist, erfolgt die zumindest teilweise Aushärtung des Beschichtungsmittels (B2a) durch eine UV-LED Lampe. Dabei wird eine 365 nm, 6W UV-LED Lampe von Easytec (100% Lampenleistung, 2 m/min, 2 Durchläufe) eingesetzt. Anschließend wird die zumindest teilweise ausgehärtete Beschichtung B2 samt Folie F2 mit der gewünschten finalen Prägestruktur von der Prägematrize, also

vom jeweils eingesetzten Masterfilm, des Prägewerkezeugs getrennt und die strukturierte Produktfolie (B2F2) erhalten.

Das eingesetzte Beschichtungsmittel (B2a) ist ein handelsübliches strahlenhärtendes Beschichtungsmittel, welches mindestens ein Urethanacrylat und mindestens einen Photoinitiator sowie handelsübliche Additive enthält. Nachfolgende Tabelle 3a fasst die Ergebnisse der Untersuchungen des Erfolgs der Replikation zusammen, die an den erhaltenen Produktfolien unter Berücksichtigung der jeweils zur Prägung eingesetzten Masterfolie durchgeführt worden sind. Das Zeichen "-" bedeutet innerhalb der Tabelle, dass die jeweilige Untersuchung nicht durchgeführt worden ist.

Tab. 3a: Erfolg der Replikation der Prägestruktur der Produktfolie

| *Eingesetzter Masterfilm* | *Erfolg der Replikation (%)* |
|---|---|
| E1F1 | 100 |
| E2F1 | 100 |
| E3F1 | - |
| E4F1 | 100 |
| E5F1 | 100 |
| E6F1 | 100 |
| E7F1 | 100 |
| V1F1 | 42* |
| V2F1 | 100 |
| V3F1 | 85 |
| V4F1 | 100 |
| V5F1 | 100 |
| = Mittelwert aus zwei Bestimmungen | |

Die Daten zeigen dass im Fall des Einsatzes von V1F1 und V3F1 als Prägematrize nur Werte von <100% bei der Beurteilung des Erfolgs der Replikation erhalten werden, da 15% bzw. 58% der Beschichtung B2 in diesen Fällen nicht von den Beschichtungen V1 bzw. V3 der jeweiligen Masterfilme entfernt werden konnten. Im Fall des Einsatzes der untersuchten Masterfilme E1F1, E2F1 und E4F1 bis E7F1 als Prägematrize wird dagegen ein Replikationserfolg von 100% der Beschichtung B2 der Produktfolie erzielt.

**2.7** *Weiterer Einsatz der Masterfilme als Prägematrize zur Herstellung von geprägten Produktfilmen*

Der erhaltene Masterfilm mit der Mikrostruktur C (E1F1) wird als Prägematrize eingesetzt. Ein Beschichtungsmittel (B2a) wird mit einer Nassschichtdicke von 100 μm auf den Masterfilm aufgebracht. Zudem wird eine PET-Folie als Substrat F2 (Hostaphan® GN) mit dem Beschichtungsmittel (B2a) in Kontakt gebracht und angepresst. Der so erhaltene Stack aus Folie (F1), Beschichtung (B1, d.h. E1), Beschichtungsmittel (B2a) und Folie (F2) wird bei Raumtemperatur (23°C) für eine Dauer von 24 Stunden ausgehärtet. Anschließend wird die zumindest teilweise ausgehärtete Beschichtung (B2) samt Folie (F2) mit der gewünschten finalen Prägestruktur von der Prägematrize, also vom eingesetzten Masterfilm (E1F1) mit der Mikrostruktur C getrennt und so die strukturierte Produktfolie (B2F2) erhalten.

Das eingesetzte Beschichtungsmittel (B2a) ist ein handelsübliches thermisch härtendes Zweikomponenten-Epoxidharz (Epofix der Firma Struers GmbH). Das Mischungsverhältnis zwischen Komponente 1 und Komponente 2 beträgt 9:1. Komponente 1 enthält mindestens ein Bisphenol-Epichlorhydrin. Komponente 2 enthält mindestens ein Polyamin.

Nachfolgende Tabelle 3b fasst die Ergebnisse der Untersuchung des Erfolgs der Replikation zusammen, die an der erhaltenen Produktfolie unter Berücksichtigung der zur Prägung eingesetzten Masterfolie durchgeführt worden ist.

Tab. 3b: Erfolg der Replikation der Prägestruktur der Produktfolie

| *Eingesetzter Masterfilm* | *Erfolg der Replikation (%)* |
|---|---|
| E1F1 | 100 |

Mit dem Einsatz des Masterfilms E1F1 als Prägematrize wird ein Replikationserfolg von 100% der Beschichtung

B2 der Produktfolie erzielt, und zwar auch dann, wenn als Beschichtungsmittel (B2a) ein thermisch härtendes Beschichtungsmittel eingesetzt wird.

## Patentansprüche

1. Ein Verfahren zur Übertragung einer Prägestruktur auf wenigstens einen Teil einer Oberfläche eines zweiten Beschichtungsmittels B2a, welches wenigstens die Schritte 1-i) und 2-i) oder 1-ii) und 2-ii) sowie wenigstens die Schritte 3) und optional 4) umfasst, nämlich

   1-i) Applizieren eines zweiten Beschichtungsmittels B2a auf wenigstens einen Teil einer Oberfläche eines zweiten Substrats F2 und
   2-i) zumindest teilweises Prägen des zumindest teilweise auf die Oberfläche des zweiten Substrats F2 applizierten zweiten Beschichtungsmittels B2a mittels wenigstens eines wenigstens eine zweite Prägematrize p2 aufweisenden zweiten Prägewerkzeugs P2, wobei die zweite Prägematrize p2 einen ersten Verbund B1F1 aus einem ersten Substrat F1 und einer zumindest teilweise geprägten und zumindest teilweise ausgehärteten ersten Beschichtung B1 umfasst, wobei nach der zumindest teilweisen Prägung ein zweiter Verbund F2B2aB1F1 erhalten wird,
   oder
   1-ii) Applizieren eines zweiten Beschichtungsmittels B2a auf wenigstens einen Teil einer zumindest teilweise geprägten Oberfläche eines als eine zweite Prägematrizep2 eines zweiten Prägewerkzeugs P2 eingesetzten ersten Verbunds B1F1 aus einem ersten Substrat F1 und einer zumindest teilweise geprägten und zumindest teilweise ausgehärteten ersten Beschichtung B1 unter Erhalt eines dritten Verbunds B2aB1F1, und
   2-ii) Applizieren eines zweiten Substrats F2 auf wenigstens einen Teil der durch das zweite Beschichtungsmittel B2a gebildeten Oberfläche des dritten Verbunds B2aB1F1 unter Erhalt eines zweiten Verbunds F2B2aB1F1, und
   3) zumindest teilweises Aushärten des zweiten Beschichtungsmittels B2a innerhalb des so erhaltenen zweiten Verbunds F2B2aB1F1 unter Erhalt eines vierten Verbunds F2B2B1F1, wobei das zweite Beschichtungsmittel B2a während der gesamten Dauer der zumindest teilweisen Aushärtung in Kontakt mit dem als zweite Prägematrize p2 eingesetzten ersten Teilverbund B1F1 innerhalb des zweiten Verbunds F2B2aB1F1 ist, und
   4) gegebenenfalls Entfernen des fünften Verbunds F2B2 innerhalb des vierten Verbunds F2B2B1F1 von dem als zweite Prägematrize p2 eingesetzten ersten Verbund B1F1,

   wobei das zur Herstellung der ersten Beschichtung B1 des als zweite Prägematrize p2 eingesetzten ersten Verbunds B1F1 eingesetzte erste Beschichtungsmittel B1a ein strahlenhärtbares Beschichtungsmittel ist,
   **dadurch gekennzeichnet, dass** das erste Beschichtungsmittel B1a

   wenigstens eine erste Komponente a) in einer Menge in einem Bereich von 40 bis 95 Gew.-%,
   wenigstens ein Additiv als zweite Komponente b) in einer Menge in einem Bereich von 0,01 bis 5 Gew.-%,
   wenigstens einen Photoinitiator als dritte Komponente c) in einer Menge in einem Bereich von 0,01 bis 15 Gew.-%, und
   wenigstens eine mindestens eine Kohlenstoffdoppelbindung aufweisende vierte Komponente d) in einer Menge in einem Bereich von 0 bis 45 Gew.-% enthält,
   wobei i) die Komponenten a), b), c) und d) jeweils voneinander verschieden sind, ii) sich die angegebenen Mengen der Komponenten a), b), c) und d) jeweils auf das Gesamtgewicht des ersten Beschichtungsmittels B1a beziehen und iii) sich die Mengen aller im ersten Beschichtungsmittel B1a enthaltenen Komponenten auf 100 Gew.-% addieren,
   und wobei die erste Komponente a) wenigstens drei jeweils voneinander verschiedene oder zumindest teilweise identische Struktureinheiten der Formel (I) aufweist

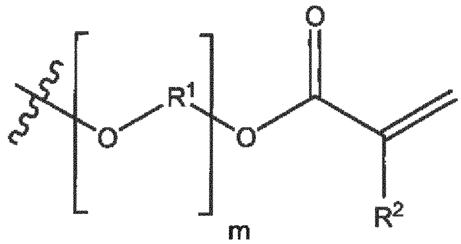

(I),

in denen
die Reste $R^1$ jeweils unabhängig voneinander für eine $C_2$-$C_8$-Alkylengruppe stehen,
die Reste $R^2$ jeweils unabhängig voneinander für H oder Methyl stehen und
die Parameter m jeweils unabhängig voneinander für einen ganzzahligen Parameter in einem Bereich von 1 bis 15 stehen, jedoch mit der Maßgabe, dass in wenigstens einer der Struktureinheiten der Formel (I) innerhalb der ersten Komponente a) der Parameter m mindestens 2 beträgt, wobei das Symbol "

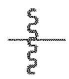

" dabei für eine Bindung des jeweiligen Restes an die übergeordnete Struktur der Komponente a) steht.

2. Das Verfahren gemäß Anspruch 1, **dadurch gekennzeichnet, dass** es sich bei dem zweiten Substrat F2 um eine sich vorzugsweise bewegende Folienbahn handelt.

3. Das Verfahren gemäß Anspruch 1 oder 2, **dadurch gekennzeichnet, dass** durch Schritt 2-i) oder durch die Schritte 1-ii) und 2-ii) Mikro- und/oder Nanostrukturen als Prägestruktur auf das zweite Beschichtungsmittel B2a übertragen werden.

4. Das Verfahren gemäß einem der vorstehenden Ansprüche, **dadurch gekennzeichnet, dass** die in Schritt 2-i) und 1-ii) eingesetzte zweite Prägematrize p2 des zweiten Prägewerkzeugs P2 wiederverwertbar und wiederholt zur Übertragung wenigstens einer Prägestruktur einsetzbar ist, wenn Schritt 4) des Verfahrens durchgeführt wird.

5. Das Verfahren gemäß einem der vorstehenden Ansprüche, **dadurch gekennzeichnet, dass** der in Schritt 2-i) und 1-ii) als zweite Prägematrize p2 eingesetzte erste Verbund B1F1 ein Verbund aus einer Folienbahn als erstem Substrat F1 und einer darauf aufgebrachten und zumindest teilweise geprägten und zumindest teilweise ausgehärteten ersten Beschichtung B1 ist.

6. Das Verfahren gemäß einem der vorstehenden Ansprüche, **dadurch gekennzeichnet, dass**
der in Schritt 2-i) als zweite Prägematrize p2 eingesetzte erste Verbund B1F1 während der Durchführung von Schritt 2-i) über eine als zweites Prägewerkzeug P2 fungierende erste Walze geführt wird und ein sechster Verbund F2B2a über eine zweite Walze geführt wird, die der ersten Walze gegenüberliegt und dieser gegenläufig oder zu dieser mitläufig ist, und
der in Schritt 1-ii) als zweite Prägematrize p2 eingesetzte erste Verbund B1F1 nach der Applikation des zweiten Beschichtungsmittels B2a auf wenigstens einen Teil seiner zumindest teilweise geprägten Oberfläche unter Erhalt des dritten Verbunds B2aB1F1 während der Durchführung von Schritt 2-ii) über eine als zweites Prägewerkzeug P2 fungierende erste Walze geführt und das innerhalb von Schritt 2-ii) eingesetzte zweite Substrat F2 über eine zweite Walze geführt wird, die der ersten Walze gegenüberliegt und dieser gegenläufig oder zu dieser mitläufig ist.

7. Das Verfahren gemäß Anspruch 6, **dadurch gekennzeichnet, dass**
die zumindest teilweise Prägung gemäß Schritt 2-i) auf Höhe des Walzenspalts erfolgt, der durch die beiden einander gegenüberliegenden, gegensinnig oder in die gleiche Richtung drehenden Walzen gebildet wird, wobei die zumindest teilweise geprägte erste Beschichtung B1 des ersten Verbunds B1F1 dem zweiten Beschichtungsmittel B2a des sechsten Verbunds F2B2a zugewandt ist, und
die zumindest teilweise Prägung gemäß Schritt 2-ii) auf Höhe des Walzenspalts erfolgt, der durch die beiden einander gegenüberliegenden, gegensinnig oder in die gleiche Richtung drehenden Walzen gebildet wird, wobei das zweite

Beschichtungsmittel B2a des dritten Verbunds B2aB1F1 dem zweiten Substrat F2 zugewandt ist.

8. Das Verfahren gemäß einem der vorstehenden Ansprüche, **dadurch gekennzeichnet, dass** der Festkörpergehalt des ersten Beschichtungsmittels B1a $\geq$90 Gew.-% ist, bezogen auf das Gesamtgewicht des ersten Beschichtungsmittels B1a.

9. Das Verfahren gemäß einem der vorstehenden Ansprüche, **dadurch gekennzeichnet, dass** in jeder der wenigstens drei Struktureinheiten der Formel (I) der ersten Komponente a) der Parameter m mindestens 2 beträgt.

10. Das Verfahren gemäß einem der vorstehenden Ansprüche, **dadurch gekennzeichnet, dass** der Anteil der in den Struktureinheiten der Formeln (I) enthaltenen Ethersegmente $-[O-R^1]_m-$ in der Komponente a) wenigstens 35 Gew.-% beträgt, bezogen auf das Gesamtgewicht der ersten Komponente a).

11. Das Verfahren gemäß einem der vorstehenden Ansprüche, **dadurch gekennzeichnet, dass** der als zweite Prägematrize p2 des zweiten Prägewerkzeugs P2 eingesetzte erste Verbund F1B1 aus einem ersten Substrat F1 und einer zumindest teilweise geprägten und zumindest teilweise ausgehärteten ersten Beschichtung B1 wenigstens erhältlich ist durch die Schritte 5) bis 8), nämlich

5) Applizieren des strahlenhärtbaren ersten Beschichtungsmittels B1a auf wenigstens einen Teil einer Oberfläche eines ersten Substrats F1,
6) zumindest teilweises Prägen des zumindest teilweise auf die Oberfläche des ersten Substrats F1 applizierten ersten Beschichtungsmittels B1a mittels wenigstens eines wenigstens eine erste Prägematrize p1 aufweisenden ersten Prägewerkzeugs P1,
7) zumindest teilweises Aushärten des auf wenigstens einen Teil der Oberfläche des ersten Substrats F1 applizierten und zumindest teilweise geprägten ersten Beschichtungsmittels B1a durch Strahlenhärtung unter Erhalt eines ersten Verbunds F1B1 aus erstem Substrat F1 und zumindest teilweise geprägter und zumindest teilweise ausgehärteter erster Beschichtung B1, wobei das erste Beschichtungsmittel B1a während der gesamten Dauer der zumindest teilweisen Aushärtung in Kontakt mit der wenigstens einen ersten Prägematrize p1 des wenigstens einen ersten Prägewerkzeugs P1 ist, und
8) Entfernen des ersten Verbunds F1B1 vom ersten Prägewerkzeug P1.

12. Ein erster Verbund F1B1 aus einem ersten Substrat F1 und einer zumindest teilweise geprägten und zumindest teilweise ausgehärteten ersten Beschichtung B1, welcher herstellbar ist durch zumindest teilweises Aushärten eines auf wenigstens einen Teil einer Oberfläche des ersten Substrats F1 applizierten und zumindest teilweise geprägten ersten Beschichtungsmittels B1a durch Strahlenhärtung, wobei das erste Beschichtungsmittel B1a ein strahlenhärtbares Beschichtungsmittel ist, **dadurch gekennzeichnet, dass** das erste Beschichtungsmittel B1a

wenigstens eine erste Komponente a) in einer Menge in einem Bereich von 40 bis 95 Gew.-%, wenigstens ein Additiv als zweite Komponente b) in einer Menge in einem Bereich von 0,01 bis 5 Gew.-%,
wenigstens einen Photoinitiator als dritte Komponente c) in einer Menge in einem Bereich von 0,01 bis 15 Gew.-%, und
wenigstens eine mindestens eine Kohlenstoffdoppelbindung aufweisende vierte Komponente d) in einer Menge in einem Bereich von 0 bis 45 Gew.-% enthält,
wobei i) die Komponenten a), b), c) und d) jeweils voneinander verschieden sind, ii) sich die angegebenen Mengen der Komponenten a), b), c) und d) jeweils auf das Gesamtgewicht des ersten Beschichtungsmittels B1a beziehen und iii) sich die Mengen aller im ersten Beschichtungsmittel B1a enthaltenen Komponenten auf 100 Gew.-% addieren,
und wobei die erste Komponente a) wenigstens drei jeweils voneinander verschiedene oder zumindest teilweise identische Struktureinheiten der Formel (I) aufweist

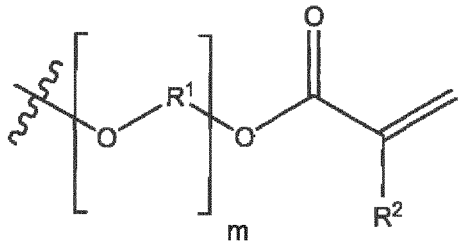

(I),

in denen
die Reste $R^1$ jeweils unabhängig voneinander für eine $C_2$-$C_8$-Alkylengruppe stehen,
die Reste $R^2$ jeweils unabhängig voneinander für H oder Methyl stehen und
die Parameter m jeweils unabhängig voneinander für einen ganzzahligen Parameter in einem Bereich von 1 bis 15 stehen, jedoch mit der Maßgabe, dass in wenigstens einer der Struktureinheiten der Formel (I) innerhalb der ersten Komponente a) der Parameter m mindestens 2 beträgt,
wobei das Symbol "

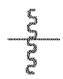

" dabei für eine Bindung des jeweiligen Restes an die übergeordnete Struktur der Komponente a) steht und wobei die Anzahl an Ethergruppen der allgemeinen Formel "-O-$R^1$-" innerhalb der Komponente a) in einem Bereich von 4 bis 18 liegt.

13. Der erste Verbund F1B1 gemäß Anspruch 12, **dadurch gekennzeichnet, dass** der Verbund mittels Durchführung der in Anspruch 11 beschriebenen Verfahrensschritte 5) bis 8) erhältlich ist.

14. Der erste Verbund F1B1 gemäß Anspruch 12 oder 13, **dadurch gekennzeichnet, dass** es sich bei dem ersten Substrat F1 um eine sich vorzugsweise bewegende Folienbahn handelt.

15. Eine Verwendung des ersten Verbunds F1B1 gemäß einem der Ansprüche 12 bis 14 als zweite Prägematrize p2 eines zweiten Prägewerkzeugs P2 zur Übertragung einer Prägestruktur auf wenigstens einen Teil einer Oberfläche eines zweiten Beschichtungsmittels B2a oder auf wenigstens einen Teil einer Oberfläche eines zweiten Beschichtungsmittels B2a, welches zumindest teilweise auf einem zweiten Substrat F2 appliziert ist.

## Claims

1. A method for transferring an embossed structure to at least a part of a surface of a second coating composition B2a, which comprises at least the steps 1-i) and 2-i) or 1-ii) and 2-ii) and also at least the steps 3) and optionally 4), specifically

1-i) applying a second coating composition B2a to at least a part of a surface of a second substrate F2 and
2-i) at least partially embossing the second coating composition B2a, applied at least partially to the surface of the second substrate F2, by means of at least one second embossing tool P2 comprising at least one second embossing die p2, where the second embossing die p2 comprises a first composite B1F1 composed of a first substrate F1 and of an at least partially embossed and at least partially cured first coating B1, to give a second composite F2B2aB1F1 after the at least partial embossing,
or
1-ii) applying a second coating composition B2a to at least a part of an at least partially embossed surface of a first composite B1F1 which is used as a second embossing die p2 of a second embossing tool P2 and which is composed of a first substrate F1 and of an at least partially embossed and at least partially cured first coating B1, to give a third composite B2aB1F1, and
2-ii) applying a second substrate F2 to at least a part of the surface, formed by the second coating composition B2a, of the third composite B2aB1F1, to give a second composite F2B2aB1F1,

and

3) at least partially curing the second coating composition B2a within the resultant second composite F2B2aB1F1,to give a fourth composite F2B2B1F1, where throughout the duration of the at least partial curing the second coating composition B2a is in contact with the first partial composite B1F1, used as second embossing die p2, within the second composite F2B2aB1F1,and

4) optionally removing the fifth composite F2B2 within the fourth composite F2B2B1F1 from the first composite B1F1 used as second embossing die p2,

where the first coating composition B1a used for producing the first coating B1 of the first composite B1F1 used as second embossing die p2 is a radiation-curable coating composition,
wherein the first coating composition B1a comprises

at least a first component a) in an amount in a range from 40 to 95 wt%,
at least an additive as second component b) in an amount in a range from 0.01 to 5 wt%, at least a photoinitiator as third component c) in an amount in a range from 0.01 to 15 wt%, and
at least a fourth component d), comprising at least one carbon double bond, in an amount in a range from 0 to 45 wt%,
where i) the components a), b), c), and d) are each different from one another, ii) the stated amounts of the components a), b), c), and d) are each based on the total weight of the first coating composition B1a, and iii) the amounts of all components present in the first coating composition B1a add up to 100 wt%,
and where the first component a) comprises at least three structural units, each different from one another or at least partially identical, of the formula (I)

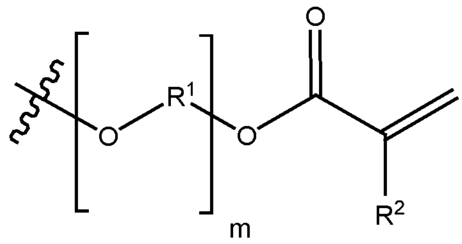

(I),

in which the radicals $R^1$ in each case independently of one another are a $C_2$-$C_8$ alkylene group,
the radicals $R^2$ in each case independently of one another are H or methyl, and
the parameters m each independently of one another are an integral parameter in a range from 1 to 15, but with the proviso that the parameter m is at least 2 in at least one of the structural units of the formula (I) within the first component a),
where the symbol "

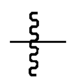

" here stands for a bond of the respective radical to the superordinate structure of the component a).

2. The method according to claim 1, wherein the second substrate F2 is a preferably moving film web.

3. The method according to claim 1 or 2, wherein micro- and/or nanostructures are transferred as embossed structure to the second coating composition B2a by step 2-i) or by steps 1-ii) and 2-ii) .

4. The method according to any of the preceding claims, wherein the second embossing die p2 of the second embossing tool P2 that is used in step 2-i) and 1-ii) is reusable and can be used repeatedly for transferring at least one embossed structure when step 4) of the method is carried out.

5. The method according to any of the preceding claims, wherein the first composite B1F1 used as second embossing die p2 in step 2-i) and 1-ii) is a composite composed of a film web as first substrate F1 and of a first coating B1

which is applied thereto and is at least partially embossed and at least partially cured.

**6.** The method according to any of the preceding claims, wherein
during the implementation of step 2-i), the first composite B1F1 used as second embossing die p2 in step 2-i) is guided via a first roll functioning as second embossing tool P2, and a sixth composite F2B2a is guided via a second roll, which lies opposite to the first roll and is counter-rotatory thereto or co-rotatory therewith, and
following the application of the second coating composition B2a to at least a part of its at least partially embossed surface to give the third composite B2aB1F1, during the implementation of step 2-ii), the first composite B1F1 used as second embossing die p2 in step 1-ii) is guided via a first roll functioning as second embossing tool P2, and the second substrate F2 used within step 2-ii) is guided via a second roll, which lies opposite to the first roll and is counter-rotatory thereto or co-rotatory therewith.

**7.** The method according to claim 6, wherein
the at least partial embossing of step 2-i) takes place at the level of the roll nip which is formed by the two mutually opposing rolls, rotating counter-directionally or in the same direction, where the at least partially embossed first coating B1 of the first composite B1F1 is facing the second coating composition B2a of the sixth composite F2B2a, and the at least partial embossing of step 2-ii) takes place at the level of the roll nip which is formed by the two mutually opposing rolls, rotating counter-directionally or in the same direction, where the second coating composition B2a of the third composite B2aB1F1 is facing the second substrate F2.

**8.** The method according to any of the preceding claims, wherein the solids content of the first coating composition B1a is ≥ 90 wt%, based on the total weight of the first coating composition B1a.

**9.** The method according to any of the preceding claims, wherein the parameter m is at least 2 in each of the at least three structural units of the formula (I) of the first component a).

**10.** The method according to any of the preceding claims, wherein the fraction of the ether segments $-[O-R^1]_m-$ present in the structural units of the formulae (I) in the component a) is at least 35 wt%, based on the total weight of the first component a).

**11.** The method according to any of the preceding claims, wherein the first composite F1B1 which is used as second embossing die p2 of the second embossing tool P2 and which is composed of a first substrate F1 and of an at least partially embossed and at least partially cured first coating B1 is at least obtainable by the steps 5) to 8), specifically

5) applying the radiation-curable first coating composition B1a to at least a part of a surface of a first substrate F1,
6) at least partially embossing the first coating composition B1a, applied at least partially to the surface of the first substrate F1, by means of at least one first embossing tool P1 having at least one first embossing die p1,
7) at least partially curing the first coating composition B1a, applied to at least a part of the surface of the first substrate F1 and at least partially embossed, by radiation curing, to give a first composite F1B1 composed of first substrate F1 and of at least partially embossed and at least partially cured first coating B1, where throughout the duration of the at least partial curing the first coating composition B1a is in contact with the at least one first embossing die p1 of the at least one first embossing tool P1, and
8) removing the first composite F1B1 from the first embossing tool P1.

**12.** A first composite F1B1 which is composed of a first substrate F1 and of an at least partially embossed and at least partially cured first coating B1, and which is producible by at least partially curing a first coating composition B1a, applied to at least a part of a surface of the first substrate F1 and at least partially embossed, by radiation curing, where the first coating composition B1a is a radiation-curable coating composition,
wherein the first coating composition B1a comprises

at least a first component a) in an amount in a range from 40 to 95 wt%,
at least an additive as second component b) in an amount in a range from 0.01 to 5 wt%,
at least a photoinitiator as third component c) in an amount in a range from 0.01 to 15 wt%, and
at least a fourth component d), comprising at least one carbon double bond, in an amount in a range from 0 to 45 wt%,
where i) the components a), b), c), and d) are each different from one another, ii) the stated amounts of the components a), b), c), and d) are each based on the total weight of the first coating composition B1a, and iii) the amounts of all components present in the first coating composition B1a add up to 100 wt%,

and where the first component a) comprises at least three structural units, each different from one another or at least partially identical, of the formula (I)

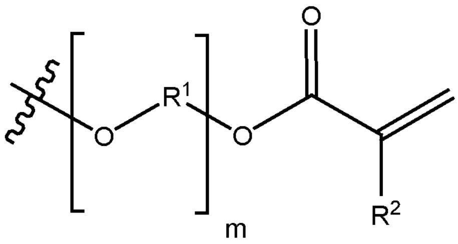

(I),

in which
the radicals $R^1$ in each case independently of one another are a $C_2$-$C_8$ alkylene group,
the radicals $R^2$ in each case independently of one another are H or methyl, and
the parameters m each independently of one another are an integral parameter in a range from 1 to 15, but with the proviso that the parameter m is at least 2 in at least one of the structural units of the formula (I) within the first component a),
where the symbol "

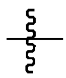

" here stands for a bond of the respective radical to the superordinate structure of the component a) and where the number of ether groups of the general formula "-O-$R^1$-" within the component a) is in a range from 4 to 18.

**13.** The first composite F1B1 according to claim 12, wherein the composite is obtainable by implementation of the method steps 5) to 8) described in claim 11.

**14.** The first composite F1B1 according to claim 12 or 13, wherein the first substrate F1 is a preferably moving film web.

**15.** A use of the first composite F1B1 according to any of claims 12 to 14 as second embossing die p2 of a second embossing tool P2 for transferring an embossed structure to at least a part of a surface of a second coating composition B2a or to at least a part of a surface of a second coating composition B2a which is at least partly applied on a second substrate F2.

**Revendications**

**1.** Procédé pour le transfert d'une structure gaufrée sur au moins une partie d'une surface d'un deuxième agent de revêtement B2a, qui comprend au moins les étapes 1-i) et 2-i) ou 1-ii) et 2-ii) ainsi qu'au moins les étapes 3) et éventuellement 4), à savoir

1-i) l'application d'un deuxième agent de revêtement B2a sur au moins une partie d'une surface d'un deuxième substrat F2 et
2-i) le gaufrage au moins partiel du deuxième agent de revêtement B2a appliqué au moins partiellement sur la surface du deuxième substrat F2 au moyen d'au moins un deuxième outil de gaufrage P2 présentant au moins une deuxième matrice de gaufrage p2, la deuxième matrice de gaufrage p2 comprenant un premier composite B1F1 composé d'un premier substrat F1 et d'un premier revêtement B1 au moins partiellement gaufré et au moins partiellement durci, dans lequel après le gaufrage au moins partiel un deuxième composite F2B2aB1F1 est obtenu,
ou
1-ii) l'application d'un deuxième agent de revêtement B2a sur au moins une partie d'une surface au moins partiellement gaufrée d'un premier composite B1F1, utilisé en tant qu'une deuxième matrice de gaufrage p2

d'un deuxième outil de gaufrage P2, composé d'un premier substrat F1 et d'un premier revêtement B1 au moins partiellement gaufré et au moins partiellement durci avec obtention d'un troisième composite B2aB1F1, et

2-ii) l'application d'un deuxième substrat F2 sur au moins une partie de la surface, formée par le deuxième agent de revêtement B2a, du troisième composite B2aB1F1 avec obtention d'un deuxième composite F2B2aB1F1,

et

3) le durcissement au moins partiel du deuxième agent de revêtement B2a à l'intérieur du deuxième composite F2B2aB1F1 ainsi obtenu avec obtention d'un quatrième composite F2B2B1F1, le deuxième agent de revêtement B2a, pendant la durée totale du durcissement au moins partiel, étant en contact avec le premier composite partiel B1F1 utilisé en tant que deuxième matrice de gaufrage p2 à l'intérieur du deuxième composite F2B2aB1F1,et

4) éventuellement le fait d'éliminer le cinquième composite F2B2 à l'intérieur du quatrième composite F2B2B1F1 du premier composite B1F1 utilisé en tant que deuxième matrice de gaufrage p2,

le premier agent de revêtement B1a utilisé pour la préparation du premier revêtement B1 du premier composite B1F1 utilisé en tant que deuxième matrice de gaufrage p2 étant un agent de revêtement durcissable par rayonnement, **caractérisé en ce que** le premier agent de revêtement B1a contient

au moins un premier composant a) en une quantité dans une plage de 40 à 95 % en poids, au moins un additif en tant que deuxième composant b) en une quantité dans une plage de 0,01 à 5 % en poids,

au moins un photoinitiateur en tant que troisième composant c) en une quantité dans une plage de 0,01 à 15 % en poids, et

au moins un quatrième composant d) présentant au moins une double liaison carbonée en une quantité dans une plage de 0 à 45 % en poids, dans lequel i) les composants a), b), c) et d) sont à chaque fois différents les uns des autres, ii) les quantités indiquées des composants a), b), c) et d) se rapportent à chaque fois au poids total du premier agent de revêtement B1a et iii) les quantités de tous les composants contenus dans le premier agent de revêtement B1a s'additionnent pour donner 100 % en poids,

et le premier composant a) présentant au moins trois motifs structuraux à chaque fois différents les uns des autres ou au moins partiellement identiques de formule (I)

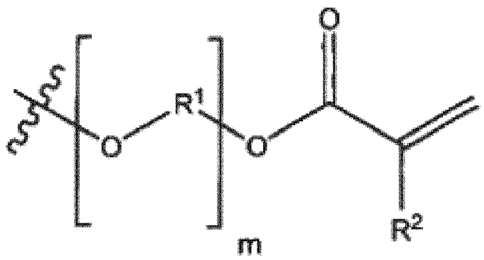

(I),

dans lesquels

les radicaux $R^1$ représentent à chaque fois indépendamment les uns des autres un groupe $C_{2-8}$-alkylène,

les radicaux $R^2$ représentent à chaque fois indépendamment les uns des autres H ou méthyle et

les paramètres m représentent à chaque fois indépendamment les uns des autres un paramètre de nombre entier dans une plage de 1 à 15, toutefois à la condition que dans au moins l'un des motifs structuraux de formule (I) dans le premier composant a) le paramètre m est au moins 2,

le symbole «

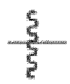

» représentant ici une liaison du radical respectif à la structure supérieure du composant a).

**2.** Procédé selon la revendication 1, **caractérisé en ce que** le deuxième substrat F2 est une bande de feuille qui de préférence se déplace.

3. Procédé selon la revendication 1 ou 2, **caractérisé en ce que** des microstructures et/ou des nanostructures sont transférées sur le deuxième agent de revêtement B2a en tant que structure de gaufrage par l'étape 2-i) ou par les étapes 1-ii) et 2-ii).

4. Procédé selon l'une quelconque des revendications précédentes, **caractérisé en ce que** la deuxième matrice de gaufrage p2 du deuxième outil de gaufrage P2 utilisée dans l'étape 2-i) et 1-ii) est réutilisable et peut être utilisée de manière répétée pour le transfert d'au moins une structure de gaufrage, lorsque l'étape 4) du procédé est mise en œuvre.

5. Procédé selon l'une quelconque des revendications précédentes, **caractérisé en ce que** le premier composite B1F1 utilisé en tant que deuxième matrice de gaufrage p2 dans l'étape 2-i) et 1-ii) est un composite composé d'une bande de feuille comme premier substrat F1 et d'un premier revêtement B1 appliqué sur celui-ci et au moins partiellement gaufré et au moins partiellement durci.

6. Procédé selon l'une quelconque des revendications précédentes, **caractérisé en ce que**
le premier composite B1F1 utilisé en tant que deuxième matrice de gaufrage p2 dans l'étape 2-i), pendant la mise en œuvre de l'étape 2-i), est conduit sur un premier rouleau fonctionnant en tant que deuxième outil de gaufrage P2 et un sixième composite F2B2a est conduit sur un deuxième rouleau, qui fait face au premier rouleau et qui est en sens inverse de celui-ci ou qui est dans le même sens, et
le premier composite B1F1 utilisé en tant que deuxième matrice de gaufrage p2 dans l'étape 1-ii), après l'application du deuxième agent de revêtement B2a sur au moins une partie de sa surface au moins partiellement gaufrée avec obtention du troisième composite B2aB1F1 pendant la mise en œuvre de l'étape 2-ii), est conduit sur un premier rouleau fonctionnant en tant que deuxième outil de gaufrage P2 et le deuxième substrat F2 utilisé dans l'étape 2-ii) est conduit sur un deuxième rouleau, qui fait face au premier rouleau et qui est en sens inverse de celui-ci ou qui est dans le même sens.

7. Procédé selon la revendication 6, **caractérisé en ce que**
le gaufrage au moins partiel selon l'étape 2-i) est réalisé à la hauteur de la fente de rouleau qui est formée par les deux rouleaux opposés l'un à l'autre, qui tournent en sens inverse ou dans la même direction, le premier revêtement B1 au moins partiellement gaufré du premier composite B1F1 étant orienté vers le deuxième agent de revêtement B2a du sixième composite F2B2a, et
le gaufrage au moins partiel selon l'étape 2-ii) est réalisé à la hauteur de la fente de rouleau qui est formée par les deux rouleaux opposés l'un à l'autre, qui tournent en sens inverse ou dans la même direction, le deuxième agent de revêtement B2a du troisième composite B2aB1F1 étant orienté vers le deuxième substrat F2.

8. Procédé selon l'une quelconque des revendications précédentes, **caractérisé en ce que** la teneur en solides du premier agent de revêtement B1a est $\geq$ 90 % en poids, par rapport au poids total du premier agent de revêtement B1a.

9. Procédé selon l'une quelconque des revendications précédentes, **caractérisé en ce que** dans chacun des au moins trois motifs structuraux de formule (I) du premier composant a), le paramètre m est au moins 2.

10. Procédé selon l'une quelconque des revendications précédentes, **caractérisé en ce que** la proportion des segments éther $-[O-R^1]_m-$ contenus dans les motifs structuraux de formule (I) dans le composant a) est d'au moins 35 % en poids, par rapport au poids total du premier composant a).

11. Procédé selon l'une quelconque des revendications précédentes, **caractérisé en ce que** le premier composite F1B1 utilisé en tant que deuxième matrice de gaufrage p2 du deuxième outil de gaufrage P2 composé d'un premier substrat F1 et d'au moins un premier revêtement B1 au moins partiellement gaufré et au moins partiellement durci peut au moins être obtenu par les étapes 5) à 8), à savoir

    5) l'application du premier agent de revêtement B1a durcissable par rayonnement sur au moins une partie d'une surface d'un premier substrat F1,
    6) le gaufrage au moins partiel du premier agent de revêtement B1a appliqué au moins partiellement sur la surface du premier substrat F1 au moyen d'au moins un premier outil de gaufrage P1 présentant au moins une première matrice de gaufrage p1,
    7) le durcissement au moins partiel du premier agent de revêtement B1a appliqué sur au moins une partie de la surface du premier substrat F1 et au moins partiellement gaufré par durcissement par rayonnement avec obtention d'un premier composite F1B1 composé du premier substrat F1 et du premier revêtement B1 au moins

partiellement gaufré et au moins partiellement durci, le premier agent de revêtement B1a, pendant la durée totale du durcissement au moins partiel, étant en contact avec l'au moins une première matrice de gaufrage p1 de l'au moins un premier outil de gaufrage P1, et
8) le fait d'éliminer le premier composite F1B1 du premier outil de gaufrage P1.

**12.** Premier composite F1B1 composé d'un premier substrat F1 et d'un premier revêtement B1 au moins partiellement gaufré et au moins partiellement durci, qui peut être préparé par le durcissement au moins partiel d'un premier agent de revêtement B1a appliqué sur au moins une partie d'une surface du premier substrat F1 et au moins partiellement gaufré par durcissement par rayonnement, le premier agent de revêtement B1a étant un agent de revêtement durcissable par rayonnement, **caractérisé en ce que** le premier agent de revêtement B1a contient

au moins un premier composant a) en une quantité dans une plage de 40 à 95 % en poids, au moins un additif en tant que deuxième composant b) en une quantité dans une plage de 0,01 à 5 % en poids,
au moins un photoinitiateur en tant que troisième composant c) en une quantité dans une plage de 0,01 à 15 % en poids, et
au moins un quatrième composant d) présentant au moins une double liaison carbonée en une quantité dans une plage de 0 à 45 % en poids, dans lequel i) les composants a), b), c) et d) sont à chaque fois différents les uns des autres, ii) les quantités indiquées des composants a), b), c) et d) se rapportent à chaque fois au poids total du premier agent de revêtement B1a et iii) les quantités de tous les composants contenus dans le premier agent de revêtement B1a s'additionnent pour donner 100 % en poids,
et le premier composant a) présentant au moins trois motifs structuraux à chaque fois différents les uns des autres ou au moins partiellement identiques de formule (I)

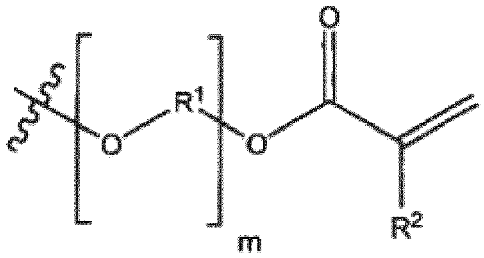

(I),

dans lesquels
les radicaux $R^1$ représentent à chaque fois indépendamment les uns des autres un groupe $C_{2-8}$-alkylène,
les radicaux $R^2$ représentent à chaque fois indépendamment les uns des autres H ou méthyle et
les paramètres m représentent à chaque fois indépendamment les uns des autres un paramètre de nombre entier dans une plage de 1 à 15, toutefois à la condition que dans au moins l'un des motifs structuraux de formule (I) dans le premier composant a) le paramètre m est au moins 2,
le symbole «

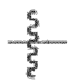

» représentant ici une liaison du radical respectif à la structure supérieure du composant a) et
le nombre de groupes éther de formule générale « -O-$R^1$- » dans le composant a) se situant dans une plage de 4 à 18.

**13.** Premier composite F1B1 selon la revendication 12, **caractérisé en ce que** le composite peut être obtenu par la mise en œuvre des étapes de procédé 5) à 8) décrites dans la revendication 11.

**14.** Premier composite F1B1 selon la revendication 12 ou 13, **caractérisé en ce que** le premier substrat F1 est une bande de feuille qui de préférence se déplace.

**15.** Utilisation du premier composite F1B1 selon l'une quelconque des revendications 12 à 14 en tant que deuxième

matrice de gaufrage p2 d'un deuxième outil de gaufrage P2 pour le transfert d'une structure de gaufrage sur au moins une partie d'une surface d'un deuxième agent de revêtement B2a ou sur au moins une partie d'une surface d'un deuxième agent de revêtement B2a qui est appliqué au moins partiellement sur un deuxième substrat F2.

Fig. 1

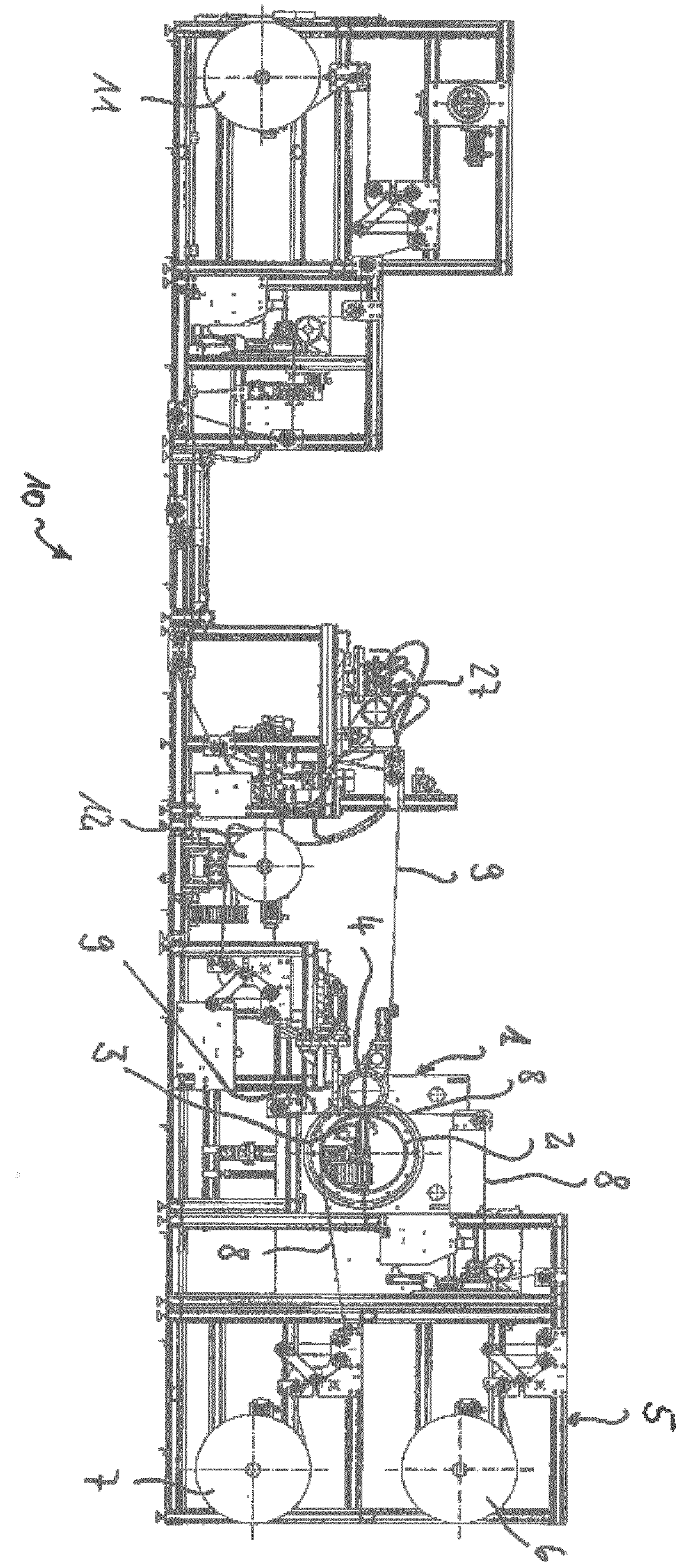

Fig. 2

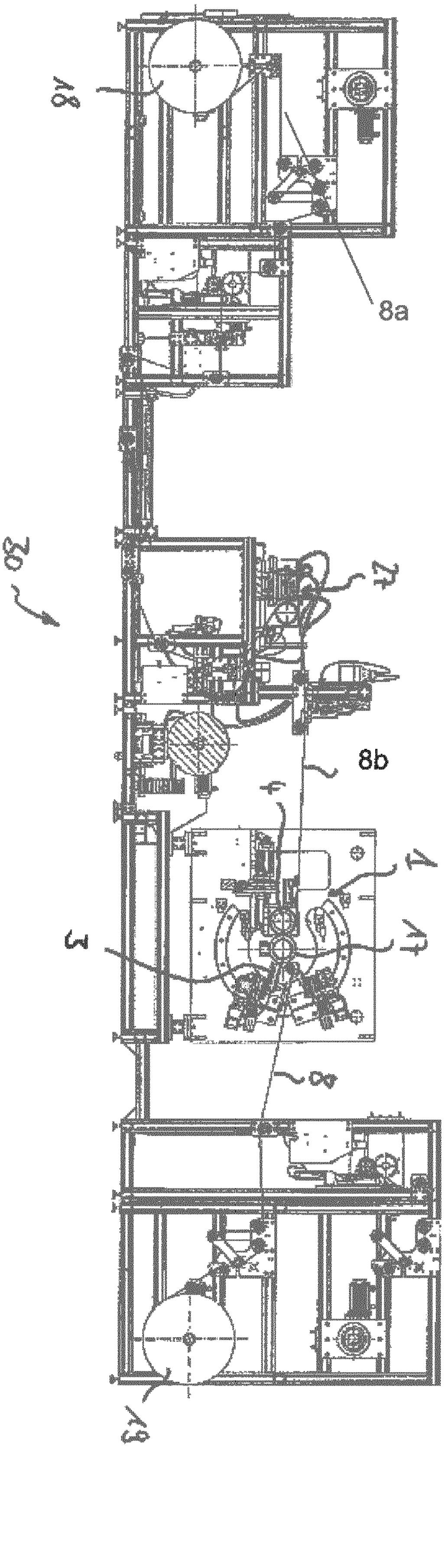

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9015673 A1
- EP 1135267 B1
- EP 3178653 A1
- US 9778564 B2
- US 20070204953 A1
- WO 2015154866 A1
- US 2015166704 A1
- DE 102007062123 A1
- EP 2146805 B1
- WO 2016090395 A1
- EP 0092269 A1


### In der Beschreibung aufgeführte Nicht-Patentliteratur


- *ACS Nano Journal,* 2016, vol. 10, 4926-4941
- Lacke und Druckfarben. Römpp Lexikon. Thieme Verlag, 1998, 13
- Lacke und Druckfarben. Römpp Lexikon. Thieme Verlag
- Lacke und Druckfarben. Römpp Lexikon. Thieme Verlag, 1998